Europäisches Patentamt

European Patent Office

Office européen des brevets

(11) Publication number: **0 025 323**
**B1**

(12) **EUROPEAN PATENT SPECIFICATION**

(45) Date of publication of patent specification: **21.11.84**

(21) Application number: **80303017.0**

(22) Date of filing: **29.08.80**

(51) Int. Cl.³: **G 06 F 5/00**

(54) **A shift circuit.**

(30) Priority: **31.08.79 JP 111249/79**

(43) Date of publication of application:
**18.03.81 Bulletin 81/11**

(45) Publication of the grant of the patent:
**21.11.84 Bulletin 84/47**

(84) Designated Contracting States:
**DE FR GB**

(56) References cited:
**US-A-3 311 896**
**US-A-3 374 468**
**US-A-3 996 566**

(73) Proprietor: **FUJITSU LIMITED**
**1015, Kamikodanaka Nakahara-ku**
**Kawasaki-shi Kanagawa 211 (JP)**

(72) Inventor: **Kohich, Ueda**
**No.35-21, Kitakarasuyama 4-chome**
**Setagaya-ku Tokyo, 157 (JP)**
Inventor: **Shigemi, Kamimoto**
**No.372, Kizuki, Nakahara-ku**
**Kawasaki-shi Kanagawa, 211 (JP)**
Inventor: **Akira, Miyata**
**No. 2-53-13, Gohongi**
**Meguro-ku Tokyo, 153 (JP)**

(74) Representative: **Overbury, Richard Douglas et al**
**HASELTINE LAKE & CO Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a shift circuit.

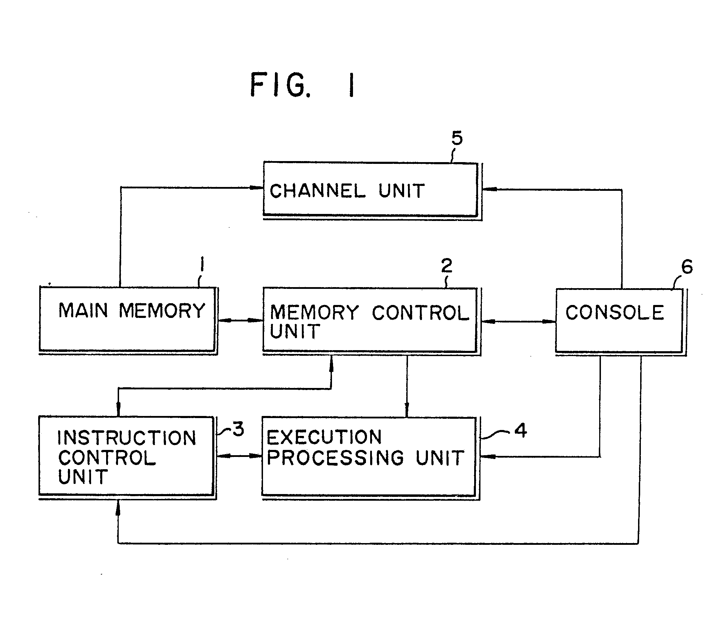

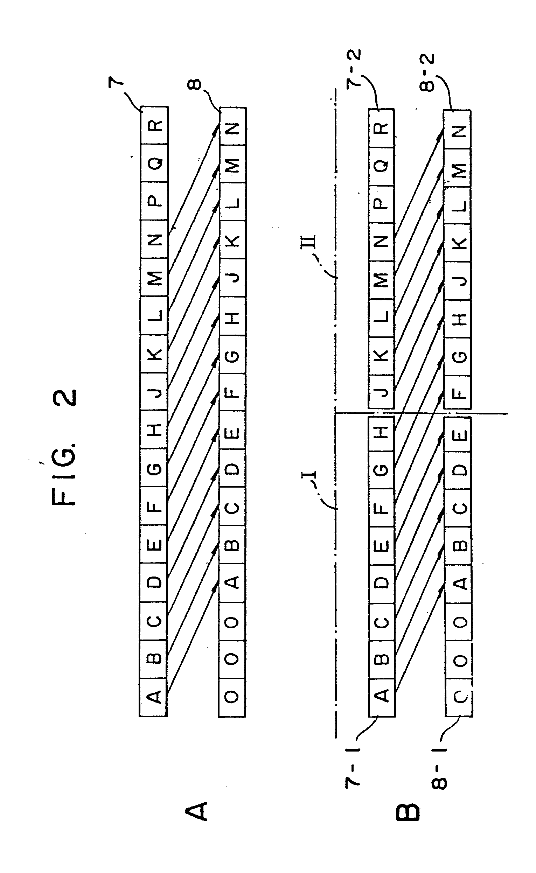

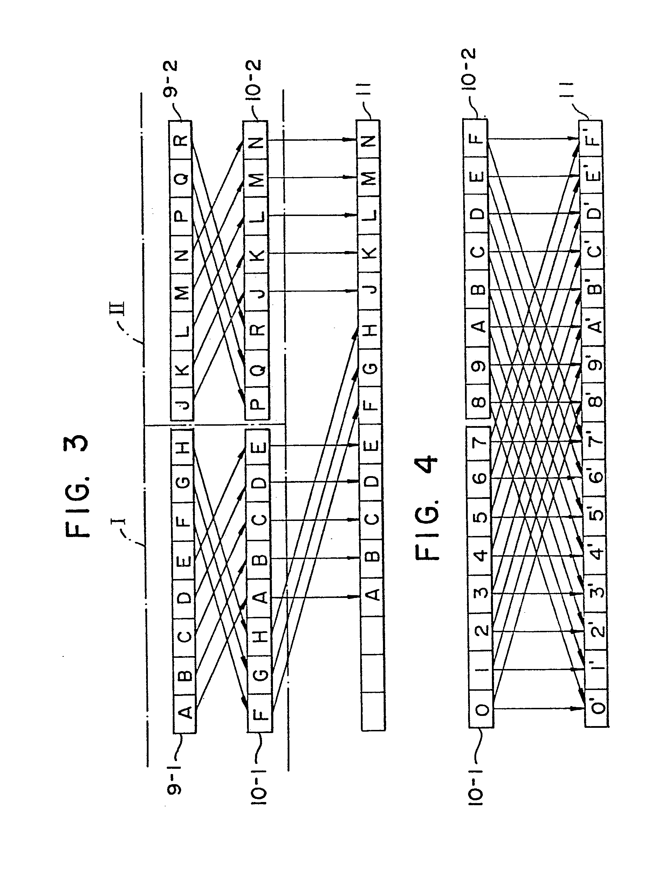

In general, a data processor comprises a main memory 1, a memory control unit 2, an instruction control unit 3, an execution processing unit 4, a channel unit 5 and a console 6, as shown in Fig. 1 of the accompanying drawings, which is a schematic block diagram. To fulfil one of the internal functions of the execution processing unit 4, a shift circuit is provided.

This shift circuit shifts input data, by a certain amount, to the right or to the left, for output. For example, as shown in Fig. 2(A) of the accompanying drawings, which schematically illustrates shifting in a conventional shift circuit, data bits A to R applied to an input part 7 are shifted by three bits to the right for transfer to an output part 8, from which the shifted data is taken out of the shift circuit. The three bits of output data on the extreme left-hand side are 0.

When shifting as illustrated in Fig. 2(A) is employed however, when the number of data bits is large, it is difficult to constitute the shift circuit on one chip and it becomes necessary to use a plurality of chips, for example, two chips I and II as shown in Fig. 2(B) of the accompanying drawings. An interface is then required between chips I and II, and an increase in the amount of data to be shifted causes a corresponding increase in the amount of data to be interfaced. In the case of Fig. 2(B), three interface lines F—F, G—G and H—H from an input part 7-1 of chip I to an output part 8-2 of chip II will do. However, in a case in which data is to be shifted to the right by eight bits an interface is required between the chips I and II from each partitioned region (i.e. from each bit-holding location) of the input part 7-1 to the output part 8-2; further, to take into account cases in which leftward shift is required, an interface is needed between the chips from each partitioned region of input part 7-2 to output part 8-1. In this way, according to the amount of data to be shifted and the allowed directions of shift, the amount of data interface required can become very large and a large number of pins are required for connection between the chips I and II.

When signals transmitted to output parts 8-1 and 8-2 are output as they are, a time lag, caused by the interface, does not matter substantially. But in a case in which A to R correspond not to respective single bits but to respective 4-bit configurations and in which A to R are shifted in a plurality of stages, for example, when the data is shifted from the input parts 7-1 and 7-2 to the output parts 8-1 and 8-2 by steps of four bit shifts in a first stage of shifting and then by one bit shift steps in a second stage of shifting, the time lag caused by the interface as a result of chip-cross at each stage has a serious effect on processing speed.

In order to prevent reduction of processing speed resulting from the time lag, it is necessary to provide on the chip II another input part for receiving the data F to R, in a case in which a three position shift is required as in Fig. 2(B). Therefore, in such a case, taking also into consideration the possibility of leftward shift and the constructions of the chips I and II overall, input of all input data A to R to both of the chips I and II involves redundant gates and a lot of input-output pins on the chips.

US—A—3 374 468 discloses a shift and rotate circuit for a data processor, in which the bits of an n-bit data word can be shifted any desired number of bit positions between 0 and n in either direction. The circuit has rotate means, for rotating the n bits, and select means for selecting rotated bits to be retained (and to be discarded) for forming the shifted word. By the select means left shift can be accomplished using right rotation.

US—A—3 996 566 discloses a shift and rotate circuit, for a data processor. An input 16-bit data word to be shifted a specified number of bit positions is broken down into 4-bit bytes. The bytes are entered in order in consecutive locations of a first memory, and entered in a rotated order dependent upon the specified shift in consecutive locations of a second memory. The contents of the first and second memories are applied byte by byte to the shift and rotate circuit which is operable to select bits of the bytes to provide the word shifted by the specified number of bit positions.

According to the present invention there is provided a shift circuit for shifting a multi-bit input data word, operable to rotate the bits of the input word and to select rotated bits for forming a shifted multi-bit output data word, characterised in that the shift circuit comprises a plurality of shift means arranged to receive respective segments of the input word, each segment comprising a plurality of consecutive bits of the input word, each shift means having a rotate part operable to rotate the bits of the segment received by the shift means, to form a rotated segment and a select part which forms a shifted segment by selecting, for each bit of the shifted segment, the bit of the same order from the rotated segment provided by the rotate part in the shift means to which the select part belongs or the bit of the same order from another rotated segment or no bit, which shifted segment forms a segment of a shifted multi-bit data word occupying a position in that data word homologous with the position in the input data word of the segment received by the shift means to which the select part belongs, said shifted multi-bit data word forming or being used to form said shifted multi-bit output data word.

An embodiment of the present invention can provide a shift circuit which is free from the abovesaid defects of the prior art discussed with regard to Fig. 2(A) and which is designed to reduce time loss resulting from chip-cross.

Briefly, in an embodiment of the present invention, in a shift circuit in which segments of a multi-bit input data word are transmitted to a plurality of shift means for shifting the segments, each shift means is provided with a data rotate part for rotating the input data segment supplied thereto, an output select part for selectively taking outputs from the plurality of rotate parts for delivery from the output select part, and a shift part for shifting the outputs from the output select parts. The input data word is rotated by a multiple of $2^A$ (including 0 and $2^A$) in the data rotate parts and then shifted by 0 to $2^A$ in the shift part.

$2^A$ is for example the number of bits in an input data group.

Thus, a first stage of shifting involves shifting by a multiple of $2^A$ bits and a second stage of shifting involves shifting by from 0 to $2^A-1$ bits.

Reference is made, by way of example, to the accompanying drawings, in which:—

Figure 1 is a block diagram schematically illustrating the configuration of a general data processing unit;

Figure 2(A) and (B), are diagrams schematically illustrating the construction of and shifting in a conventional shift circuit;

Fig. 3 is a diagram schematically illustrating the construction of and shifting in a shift circuit embodying the present invention;

Fig. 4 is a diagram schematically illustrating operation of a select part in a shift circuit embodying the present invention;

Fig. 5 is a tabular diagram illustrating rotate-shift operation in a shift circuit embodying the present invention;

Fig. 6 is a tabular diagram illustrating selection operations of a select part in a shift circuit embodying the present invention;

Fig. 7 is a block diagram illustrating the arrangement of a shift circuit embodying the present invention;

Fig. 8 is a schematic diagram illustrating how a rightward shift is effected in the embodiment of Fig. 7;

Fig. 9 is a schematic diagram illustrating how a leftward shift is effected in the embodiment of Fig. 7;

Fig. 10 is a detailed circuit diagram illustrating one example of the construction of a data rotate part 12-1 and a shift control part 13-1 of the embodiment of Fig. 7;

Fig. 11 is a detailed circuit diagram illustrating one example of the construction of a data rotate part 12-3 and a shift control part 13-2 of the embodiment of Fig. 7;

Fig. 12 is a detailed circuit diagram illustrating one example of the construction of an output select part 14-1, of a partition 15-1 of a select part output 11 and of a shift part 16-1 of the embodiment of Fig. 7;

Fig. 13 is a detailed circuit diagram illustrating one example of the construction of a select part 14-2, of a partition 15-2 of the select part output 11 and of the shift part 16-2 of the embodiment of Fig. 7;

Fig. 14 is a detailed circuit diagram illustrating one example of the construction of a shift control part 17-1 of the embodiment of Fig. 7;

Fig. 15 is a detailed circuit diagram illustrating one example of the construction of a shift control part 17-2 of the embodiment of Fig. 7;

Fig. 16 is a tabular diagram, similar to Fig. 5, illustrating rotate shift operation in another embodiment of this invention;

Fig. 17 is a schematic diagram illustrating operation of select part outputs in another shift circuit embodying the present invention;

Fig. 18 is a tabular diagram, similar to Fig. 6, illustrating select operation in another embodiment of the present invention;

Fig. 19 is a tabular diagram similar to Fig. 5, illustrating rotate shift operation in a further embodiment of the present invention;

Fig. 20 is a tabular diagram, similar to Fig. 6, illustrating select operation in the further embodiment of the present invention;

Fig. 21 is a schematic diagram illustrating operation in relation to a select part output in the further embodiment of the present invention; and

Fig. 22 is a schematic diagram illustrating how a shift is effected in a shift circuit embodying the present invention.

In the following description, reference numerals 9-1 and 9-2 indicate input parts; 10-1 and 10-2 designate rotate part outputs; 11 identifies a select part output; 12-1 and 12-2 denote rotate parts; 13-1 and 13-2 represent shift control parts; 14-1 and 14-2 are select parts; 15-1 and 15-2 refer to partitions of the select parts; 16-1 and 16-2 indicate shift parts; 17-1 and 17-2 designate second shift parts; and reference characters CI to CIV identify LSI chips.

A description will be given, with reference to Fig. 3, of the outline of a shift circuit employed in an embodiment of the present invention.

Input data A to R, making up a multi-bit input data word, is entered into input parts 9-1 and 9-2 in the state as shown in Figure 3. It will be noted that the input data seen in Figure 3 is divided into two segments A to H and J to R, which are entered respectively into the input parts 9-1 and 9-2. Each segment comprises a plurality of consecutive bits of the input data word.

(1) When A to R each have a 1-bit configuration.

A description will be given first in connection with a case in which A to R are shifted rightwards by three bits.

At first, the input data bits in the segment in the input part 9-1 are rotated rightwards by three bits in the manner shown for output to the rotate part output 10-1, and the input data bits in the segment in the input part 9-2 are rotated rightward by three bits in the manner shown for output to the rotate part output 10-2. As a consequence, the data bits shown in Fig. 3 are posted in the rotate part outputs 10-1 and 10-2. The data bits thus posted in the rotate part outputs 10-1 and 10-2 are output to select part output 11, as indicated by arrows. That is, A to E and J to N of the data bits posted in the rotate part outputs 10-1 and 10-2 are output to partitions directly below them in Fig. 3, but F, G and H in the rotate output part 10-1 are output to partitions or posts corresponding to (i.e. directly below) those partitions or posts of rotate output 10-2 in which P to R are posted.

In this case, the select part output 11 is arranged so that each partition thereof selectively receives one of two inputs from rotate part outputs 10-1, 10-2 as indicated by arrows in Fig. 4.

For example, in Fig. 4 a partition 0' of the select part output 11 is selectively supplied with data transmitted from partition 0 of the rotate part output 10-1 or partition 8 of the rotate part output 10-2. To a partition F' of the select part output 11 is selectively output data transmitted from a partition 7 of rotate part output 10-1 or a partition F of rotate part output 10-2. Accordingly, by selective output of data to partitions 8', 9' and A' of the select part output 11 from the partitions 0, 1 and 2 of the rotate part output 10-1, and by selective output of data to partitions 3' to 7' and B' to F' of the select part output 11 from those partitions of the rotate outputs 10-1 and 10-2 which are positioned directly above them, the input data entered in the input parts 9-1 and 9-2 in Fig. 3 can be output in such a state as is shown in the select part output 11 in Figure 3, in which the data has been shifted rightwards by three bits.

In this case, since no data transfer takes place between chips I and II (between input parts 9-1, 9-2 and respective rotate part outputs 10-1, 10-2), data transmission can be achieved at high speed. Chip-cross occurs between some partitions of the select part output 11 and some partitions of the rotate part output 10-1, but in this case it is sufficient for the select part output 11 to perform only a select operation and control thereof is very easy, unlike a case of shifting as explained in Figs. 1 and 2.

(2) When A to R each have a 4-bit configuration (when A to R are respective 4-bit data groups).

The above description has been given in relation to a case in which each partition in an input part, a rotate part output and a select part output corresponds to 1-bit, so as to facilitate understanding of the present invention. In a case in which each partition corresponds to a 4-bit data group, shift is carried out in the manner described below.

The input data is still divided into segments each comprising a plurality of consecutive bits of the input data word, but rotation and selection are effected in terms of 4-bit data groups.

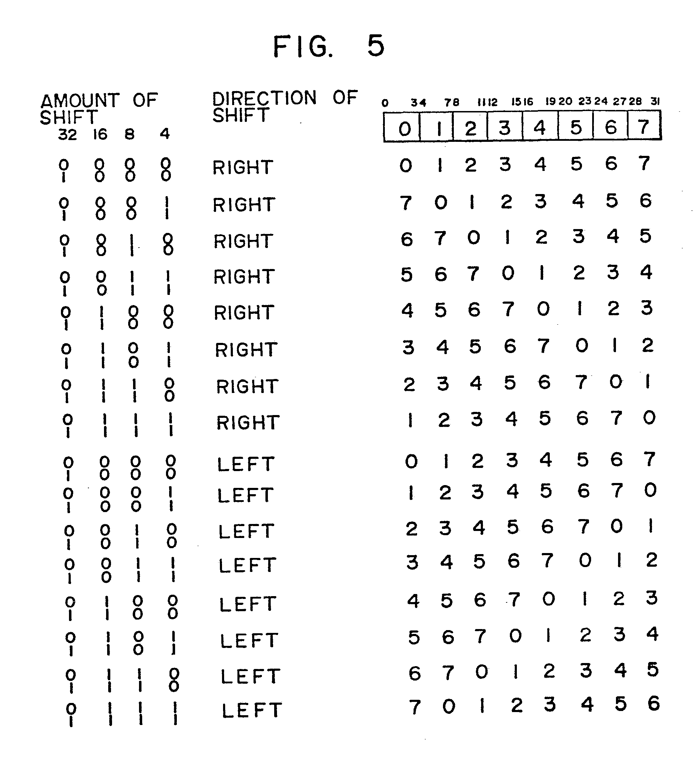

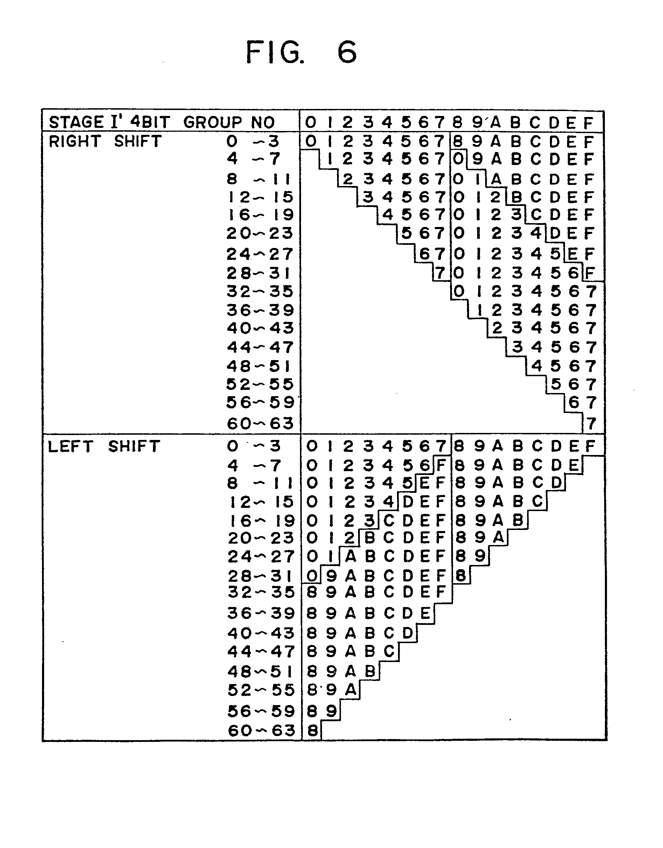

In this case, since a movement by one partition in a rotate part output corresponds to a movement of four bits, the input data is first rotated by a multiple of four bits (which may be 0 bits or 4 bits as well as a higher multiple) in a first stage of shifting, and then the resulting outputs are selected, and shifted by 0, 1, 2 or 3 bits in a second stage of shifting. The contents of a rotate part output in dependence upon the amount of rotation, and the selection in the select part output 11 in dependence upon the amount of rotation, are illustrated in Figures 5 and 6 respectively.

In Figure 5 amounts of shift are tabulated in terms of rotations of different multiples of 4-bits. Amounts of shift are represented in binary notation:— e.g. a shift by 20 bits (5 times 4-bits) is represented by 0101. It will be noted that a shift by $N$ multiples of 4 bits is equivalent to a shift by $(N \times 4 + 32)$ bits.

The amount of shift is tabulated in terms of direction of shift also.

At the top right of Figure 5 an input part (9-1 or 9-2) is shown. The eight partitions of the input part contain a sequence of 4-bit data groups 0 to 7 (32 bits in all).

The entries in columns below the eight partitions of the input part indicate, for different amounts of rotation, the sequences in which data groups 0—7 are placed in partitions of a rotate part output (10-1 or 10-2) as a result of the rotation.

Each entry in a column below a partition of the input part gives the content of the corresponding partition of the rotate part output concerned, subject to the relevant amount of rotation.

For example, for a 20 bit rightward shift (a 5 data group rightward rotation) data groups 0 to 7 appear in the rotate part output partitions in the sequence 3, 4, 5, 6, 7, 0, 1, 2.

In Figure 6, at top right, 0 to F correspond to the respective data group contents of the sixteen partitions of the rotate part outputs 10-1 and 10-2, before selection for the select part output 11, in sequence.

Against each tabulated amount of shift the sequence of data groups selected for the select part output is indicated. Each entry in a column below a partition of the rotate part outputs 10-1 and 10-2 gives the content of the corresponding partition of the select part output 11, subject to the relevant amount of rotation.

No entry indicates zero contents.

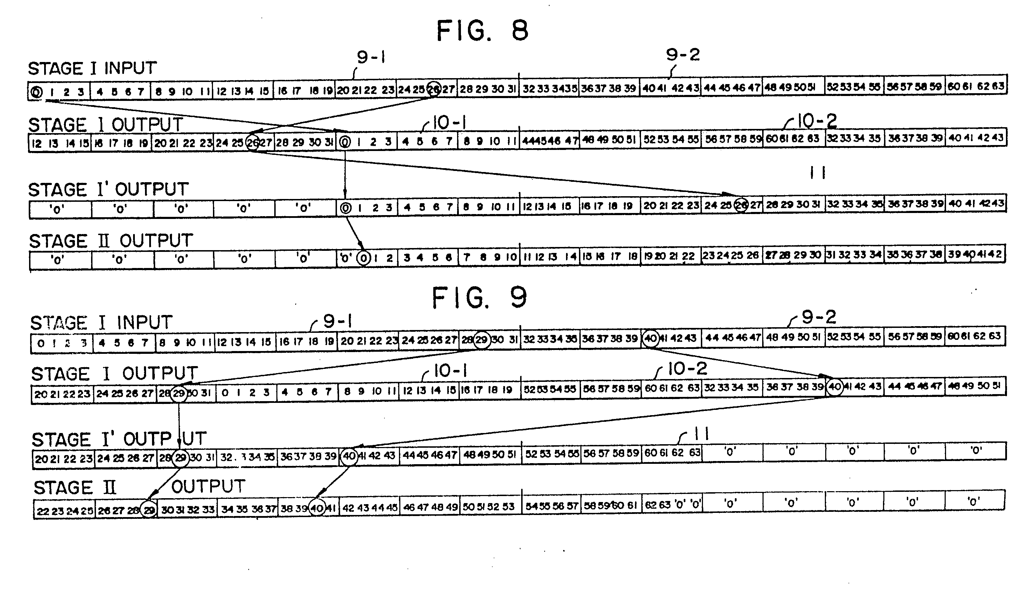

The amounts of shift are indicated in terms of bits. Figure 6 is concerned with selection after rotation by a multiple of 4 bits (i.e. of the first stage of shift operation). This relates to STAGE I' OUTPUT in Fig. 8, see below.

Figure 6 is not concerned with shifts by 1, 2, or 3 bits (which are effected in the second stage of shift operation, see STAGE II OUTPUT in Fig. 8 below).

Thus, in terms of Figure 6, shifts by 0, 1, 2 or 3 bits all correspond to rotation by zero groups of four bits whilst shifts of 20, 21, 22 or 23 bits all correspond to a rotation by five groups of 4 bits. Thus, a row of Fig. 6 corresponds to the content of select output part 11 tabulated for a range of shift amounts (a 4 bit range) as indicated.

A shift circuit embodying this invention will hereinbelow be described in connection with a specific operative example for a 4-bit configuration of input data groups, in which input data are shifted to right by 21 bits. As shown in Fig. 8, the input parts 9-1 and 9-2 have entered therein bits numbered 0 to 63. In order to shift the data rightwards by 21 bits, the data is first shifted rightwards by 20 bits (5 partitions); i.e. a multiple of 4 bits, and then further shifted rightwards by one bit. Accordingly, for shifting the data rightwards by 20 bits, it is first necessary to rotational-shift the data five times (5 units of 4-bits); the resulting pattern in the rotate part outputs 10-1, 10-2 is shown in Fig. 8 STAGE I OUTPUT. This pattern can be seen to correspond to the status of shift indicated against an amount of shift 20 RIGHT (0101 in the binary code) in Fig. 5 in which groups of four bits are sequentially represented by "0", "1", ... "7". Referring to Figure 6 to understand how the contents of the partitions of the rotate part outputs 10-1, 10-2 are selected and placed in partitions of the select part 11 to give STAGE I' OUTPUT in Fig. 8; it will be seen that when a selection indicated in Fig. 6 as corresponding to the amount of rotational shift 21 bits (RIGHT) is made, which is the same as for 20 bits or 5 4-bit groups, data groups, 5, 6, 7 and D, E, F of the rotate part outputs 10-1 and 10-2 are output, as they are, from the partitions which they occupy in 10-1, 10-2 to correspondingly positioned partitions of the select part output 11. However, data groups 0, 1, 2, 3, 4 of the rotate part output 10-1 are output from the partitions which they occupy to partitions of select output part 11 which correspond in position to the partitions occupied by data groups 8, 9, A, B, C in rotate part output 10-2. As a result of this, the data in the select part output 11 becomes such as is shown in Fig. 8 STAGE I' OUTPUT, in which the data has been shifted to right by 20 bits. By further shifting the data to right by one bit to give the STAGE II OUTPUT of Fig. 8, there can be obtained an output in which input data has been shifted rightwards by 21 bits.

A description will be given, with reference to Fig. 9, of a case in which input data is shifted leftwards by 22 bits.

The data input in to input parts 9-1 and 9-2 in Fig. 9 (STAGE I INPUT) are shifted leftwards by 20 bits, that is, rotate-shifted by a leftward rotation of five partitions in accordance with the table of Fig. 5, whereby the data are put into such a state as is shown in the rotate part outputs 10-1 and 10-2 in Fig. 9. Then, the selective output indicated as corresponding to a 22-bit left shift in Fig. 6 is carried out in relation to the select part output 11. As a result of this data groups occupying partitions 0, 1, 2 and 8, 9, A of the rotate part outputs 10-1 and 10-2 are output as they are, to correspondingly positioned partitions of select part output 11. On the other hand, data groups from partitions B, C, D, E, F of the rotate part output 10-2 are output to partitions of select part output 11 corresponding to partitions of rotate part output 10-1 occupied by data groups 3, 4, 5, 6, 7. As a consequence, there are posted in the select part output 11 input data in a state shifted leftwards by 20 bits, as shown in STAGE I' OUTPUT in Fig. 9. By further shifting the data leftward by two bits, the input data can be shifted leftwards by 22 bits, as shown in STAGE II OUTPUT.

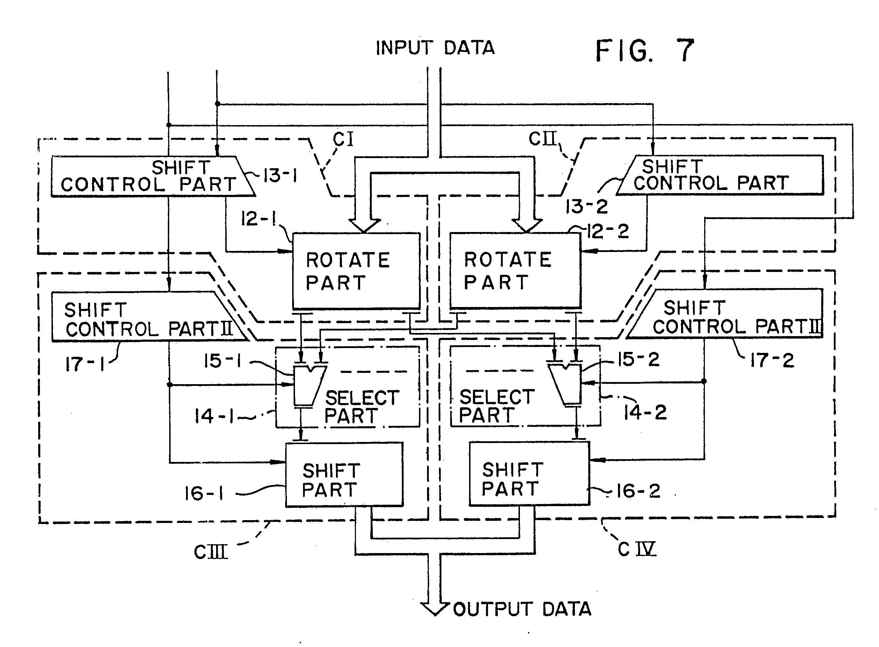

Such input data shift control can be performed by a shift device as shown in Fig. 7.

In rotate part 12-1 of Fig. 7 input part 9-1 and the rotate part output 10-1 are provided, whereas in rotate part 12-2 of Fig. 7 input part 9-2 and the rotate part output 10-2 are provided. Shift control part 13-1 controls the rotate part 12-1 in such a manner as to rotate-shift input data in the input part 9-1 in accordance with the direction of shift and the amount of shift desired. Shift control part 13-2 performs a control operation similar to that of the shift control part 13-1, but in respect of rotate part 12-2.

Select part outputs are provided in select parts 14-1 and 14-2. Shift parts 16-1 and 16-2 are provided to shift data by from 0 to 3 bits, which amounts of shift are insufficient to be effected by the 4-bit rotation of the rotate parts 12-1 and 12-2. Second shift control part 17-1 controls each partition of the select part output 11 in the select part 14-1 (one partition is indicated by 15-1 in Fig. 7) in accordance with the direction of shift and the amount of shift indicated in Fig. 6 and controls the shift part 16-1 to provide a right or left shift or from 0 to 3 bits in accordance with the desired amount of shift. The second shift control part 17-2 is identical in construction with the shift control part 17-1. In this way, such a predetermined shift as, for example, in Figs. 8 and 9 is carried out.

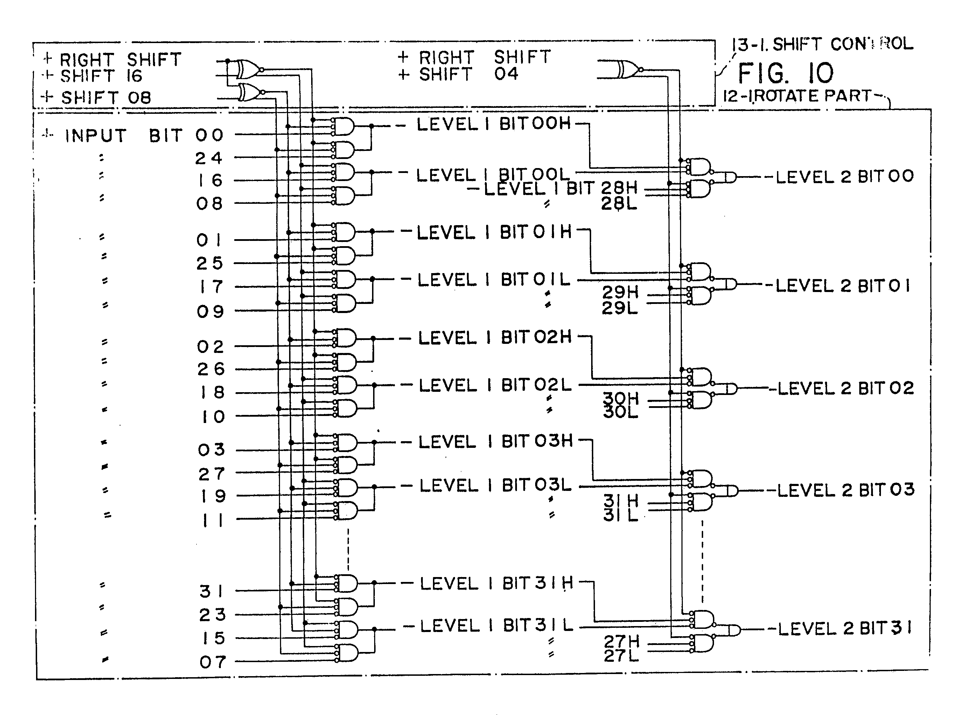

One example of detailed constructions of parts of the shift device shown in Fig. 7 is illustrated in Figs. 10 to 15 in which parts corresponding to those in Fig. 7 are identified by the same reference numerals.

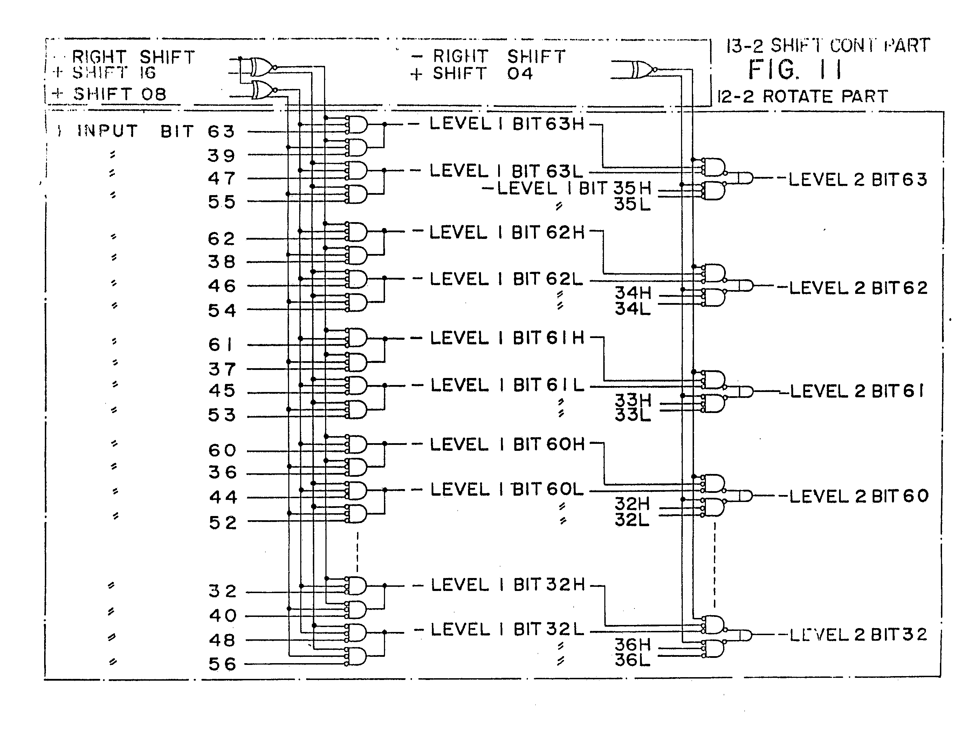

Fig. 10 illustrates in detail examples of arrangements of the rotate part 12-1 and the shift control part 13-1, and Fig. 11 shows in detail examples of arrangements of the rotate part 12-2 and the shift control part 13-2.

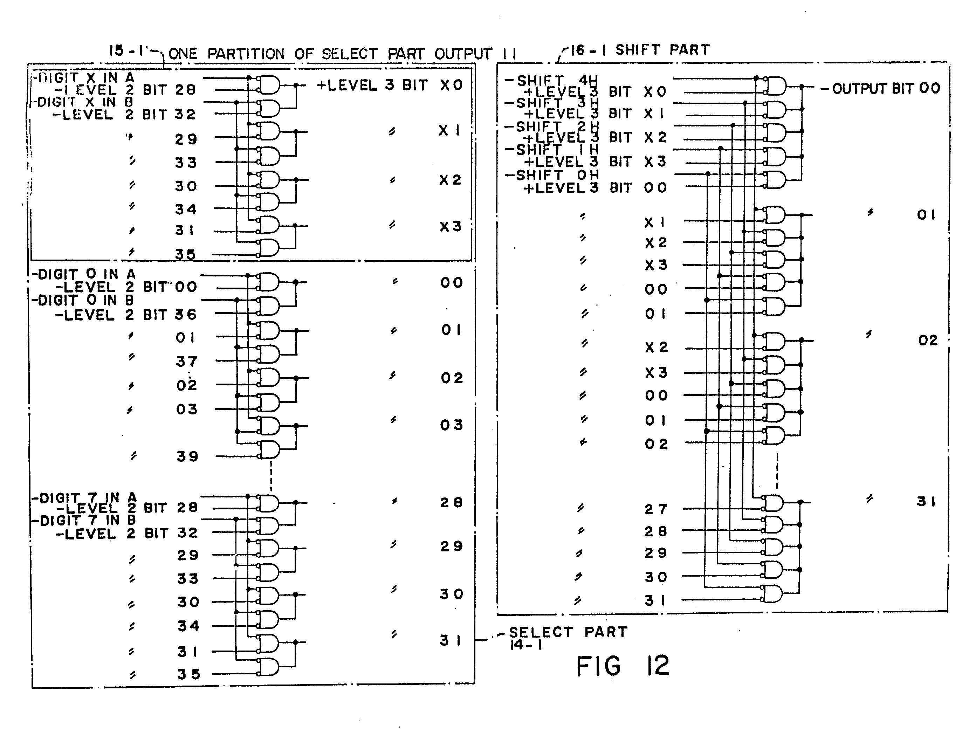

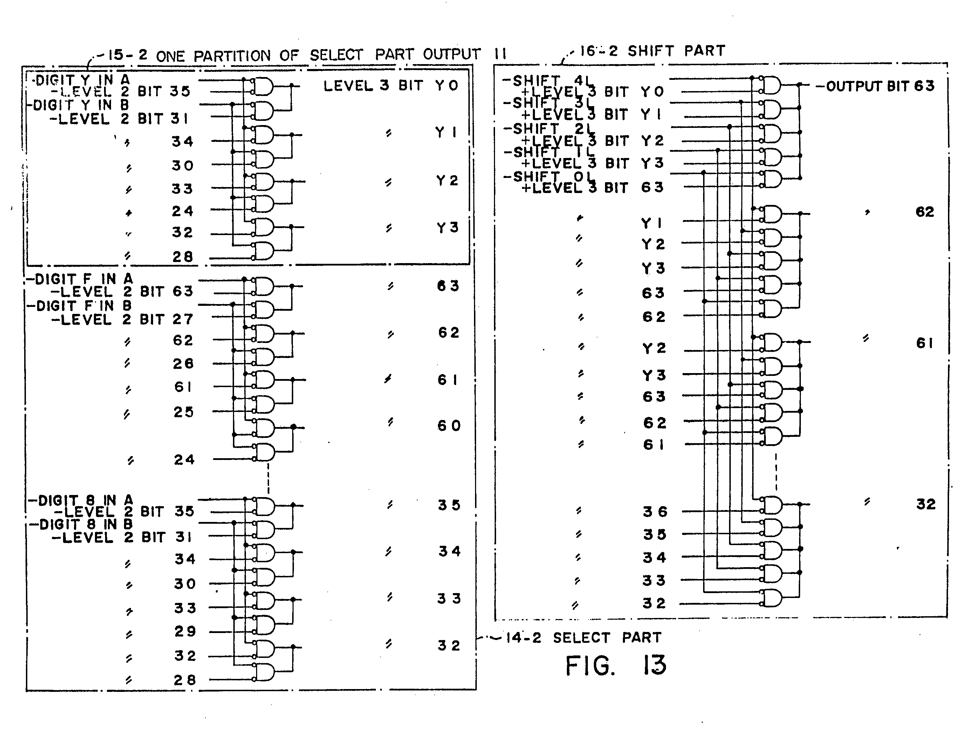

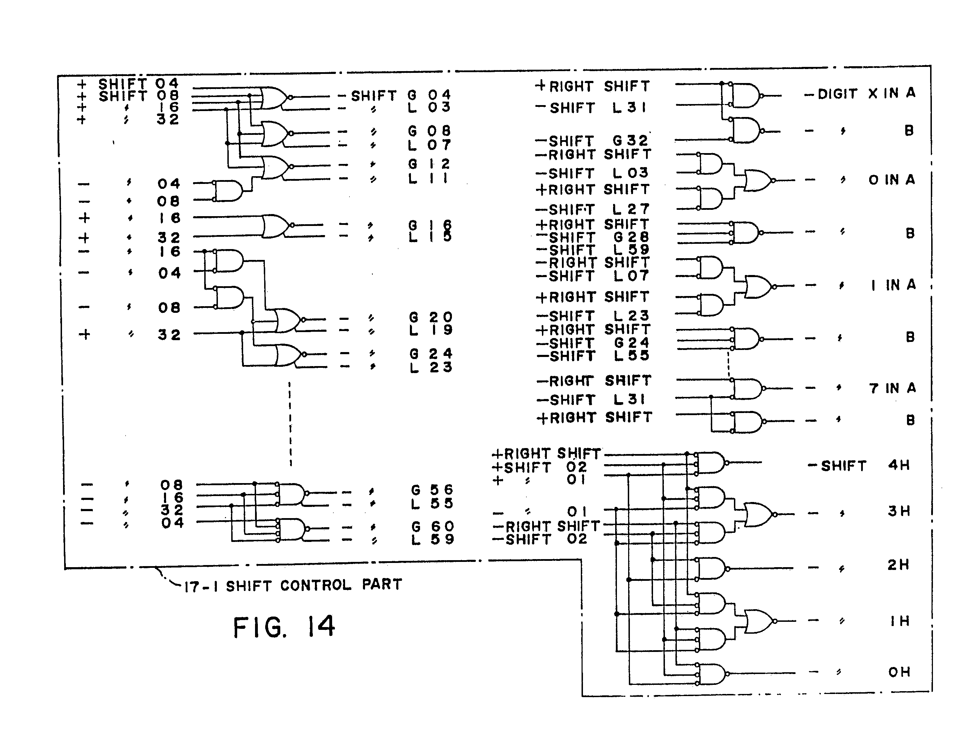

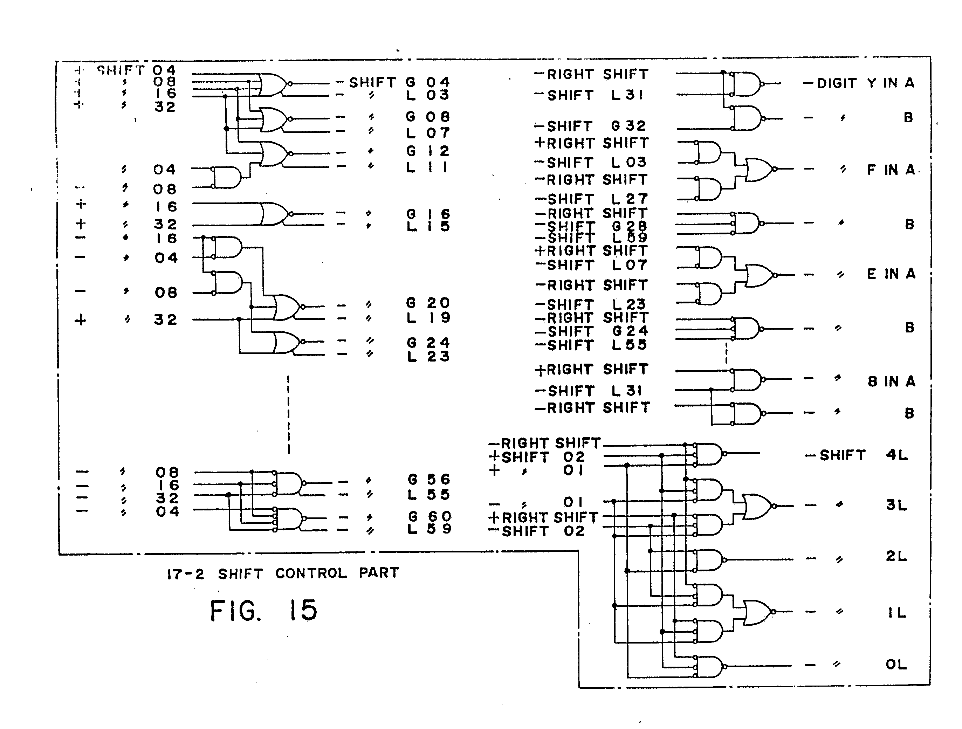

Similarly, Fig. 12 illustrates in detail examples of arrangements of select part 14-1 and the partition 15-1 of the select part output 11 and the shift part 16-1, and Fig. 13 illustrates examples of the arrangements of the select part 14-2 and a partition 15-2 of the select part output 11 and the shift part 16-2. Fig. 14 illustrates an example of the arrangement of the shift control part 17-1, and Fig. 15 an example of the arrangement of the shift control part 17-2.

In the example of Fig. 7, the rotate part 12-1 and the shift control part 13-1 are constituted by an LSI chip CI; the rotate part 12-2 and the shift control part 13-2 are constituted by an LSI chip CII; the select part 14-1, the shift part 16-1 and the second shift control part 17-1 are constituted by an LSI chip CIII; and the control part 14-2, the shift part 16-2 and the second shift control part 17-2 are constituted by an LSI chip CIV. In this case, it is possible to use the same type of LSI chip for CI and CII and for CIII and CIV respectively.

In the above example, as described in connection with Figs. 8 and 9, a shift of from 0 to 3 bits in the second stage of shifting, stage II, must be performed by a shift part capable of both rightward and leftward shifts. If, however, shift in stage II could be limited to only rightward shift or to only leftward shift, it would be possible to reduce greatly the number of gates making up the shift part for effecting the second stage of shifting.

In order to allow the shift in the stage II to be restricted rightward shift alone, it is sufficient to provide for rotation of data leftward by an extra four bits (an extra partition). In other words, when data are to be shifted leftwards by 22 bits, the data should be rotated leftwards by 24 bits in the first stage of shifting, stage I, and then shifted rightwards by two bits in the second stage of shifting, stage II.

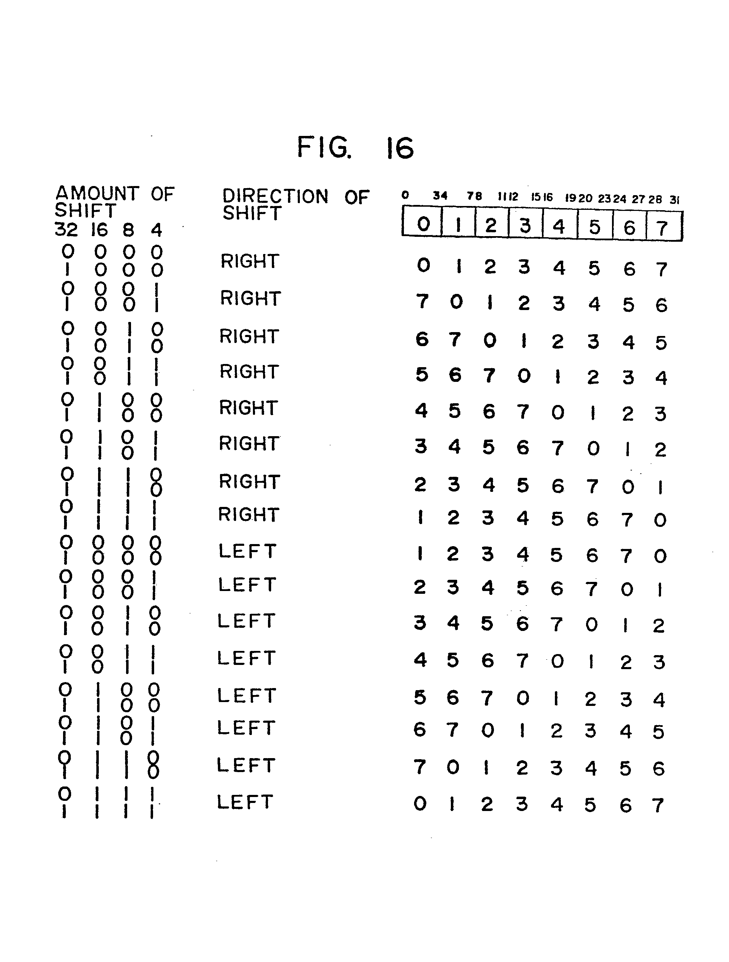

Figure 16 is a tabular diagram similar to that of Fig. 5 but relates to a case in which only rightward shifts of 1, 2 or 3 bits can be provided in the second stage of shifting. Thus the rotations corresponding to non-zero leftward rotation-shifts in Fig. 16 include an extra 4-bit rotation as compared with Fig. 5.

As is apparent from Fig. 16, the shift operation for a right shift 0(32) is identical with the shift operation for a left shift 28(60) and the shift operation for a right shift 4(36) is identical with the shift operation for a left shift 24(56). Similar identities are true of the other right and left shift operations. Furthermore, it appears that excepting a weight bit 32 in the amount of shift represented by the binary code, i.e. a bit of weight 32 in the binary representations of shift amount, (the weight bit 32 has no affect on the rotate operation. Right shift 0 and right shift 32 are identical with each other), the left shift operation for a given amount of shift is identical with the right shift operation for an amount of shift which is indicated by the 1's complement of the amount of leftward shift as represented by binary bits of weights 16, 8 and 4. Use of this can be made to greatly facilitate decoding of the amount of shift in the shift operation of the rotate part and to reduce the time needed for decoding.

To allow such use to be made, the output status of the first stage of shifting (stage I′)

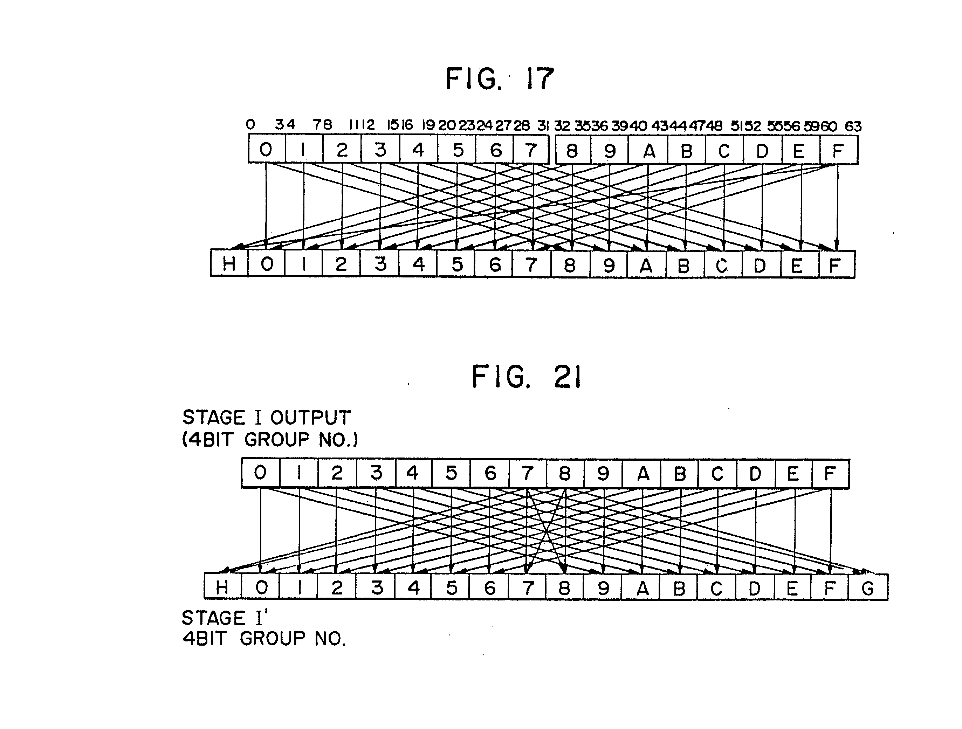

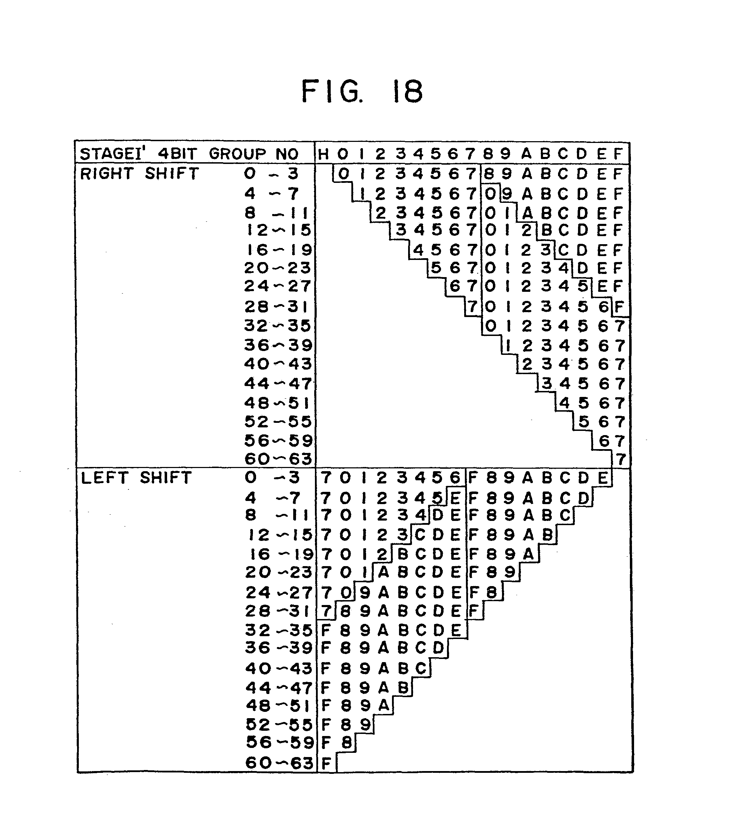

requires an extra select part output which is provided by an extra partition H, as shown in Fig. 17. This select part output partition can be selected to take either one of the data groups 7 and F from the data groups 0 to F (see Fig. 6) of the rotate part output, and the manner in which selection is made is illustrated in Fig. 18.

It is also possible to arrange the shift part for stage II shift to shift data of the higher-order half of input data rightwards only and to shift data of the lower-order half of the input data leftwards only.

Letting the amount of shift S be represented by $S=P\times2^2+Q$, rightward and leftward shifts can be achieved in the following manner:

(1) Rightward shift

In the rotate part supplied with the data groups of the higher-order half of the input data, the data is rotate-shifted to the right by $P\times2^2$ and then shifted to the right by Q in the second stage shift part. The data groups of the lower-order half of the input data are rotate-shifted to the right by $(P+1)\times2^2$ and then shifted leftwards by $2^2-Q$ in the shift part.

(2) Leftward shift

In the rotate part supplied with the data groups of the higher-order half of the input data, the data is rotated left by $(P+1)\times2^2$ and then shifted rightwards by $2^2-Q$ in the second stage shift part. In the rotate part supplied with the data groups of the lower-order half of the input data, the data is rotated left by $P\times2^2$ and then shifted leftwards by Q in the second stage shift part.

The operation of the rotate part supplied with the data groups of the higher-order half of the input data is identical to the operation illustrated in Fig. 16 and to the operation of the rotate part supplied with the data groups of the lower-order half of the input data.

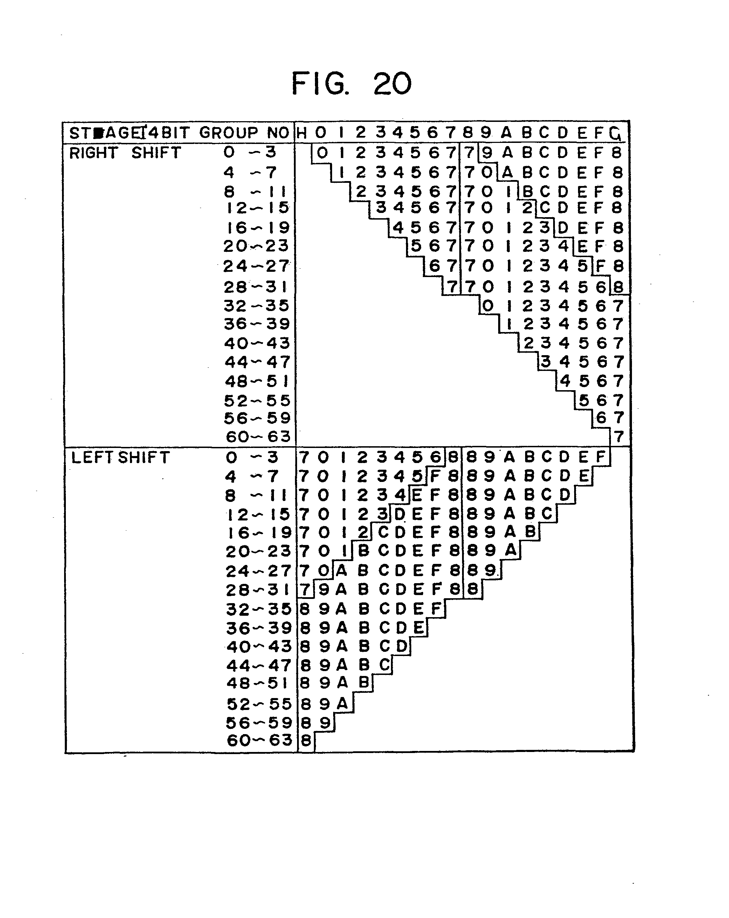

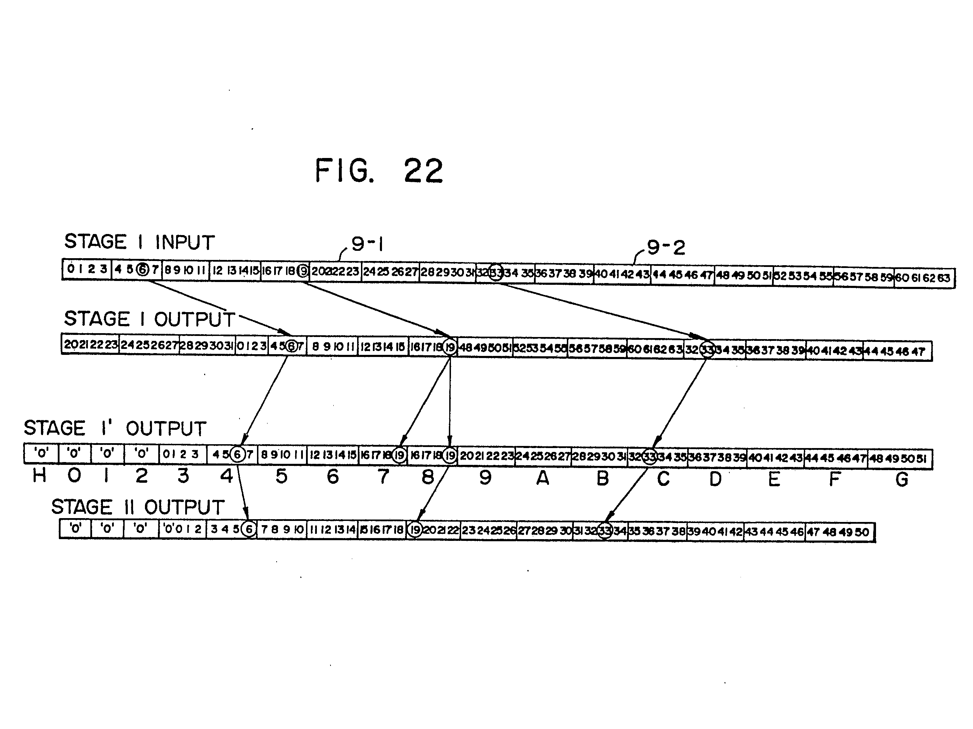

In such a case, the arrangement of the select part output is as shown in Fig. 21, in which the select part output corresponding to the lower-order half of the input data is larger than in the case of Fig. 17 by one partition, that is, a partition G. The output select modes relating this select part output are as illustrated in Fig. 20.

Now, a description will be given, with reference to Fig. 22, of a 13-bit right shift.

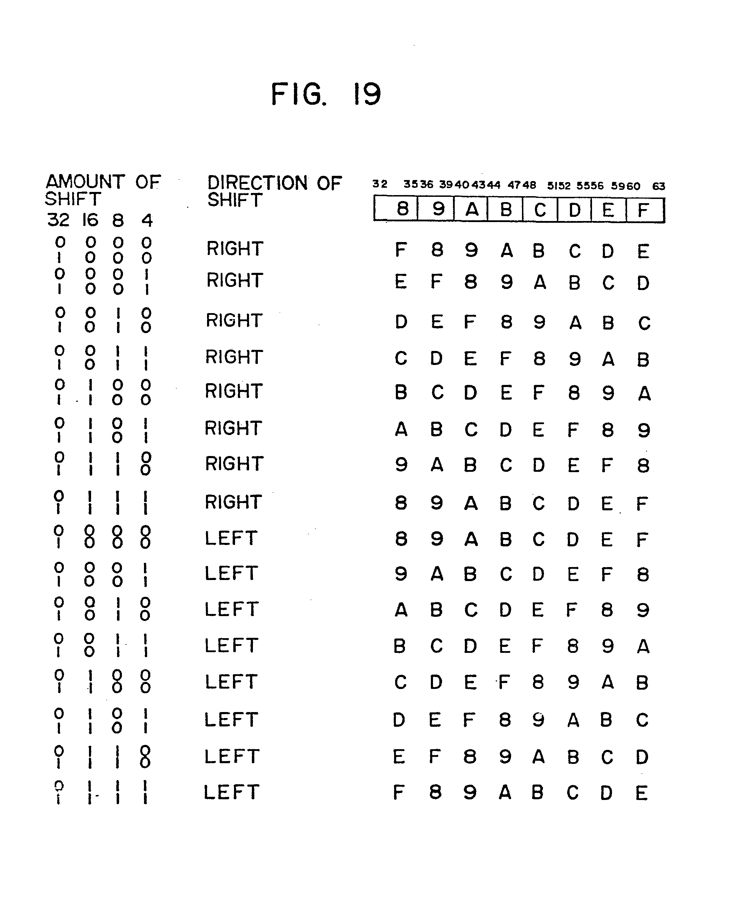

The higher-order half of input data 0 to 63 is input to input part 9-1 and the lower-order half is input to input part 9-2 (STAGE I INPUT). In the STAGE I OUTPUT, the data input to input part 9-1 is rotated rightwards by three partitions, that is, 12 bits, by rotate-shift as tabulated in Fig. 16, whereas the data in the input part 9-2 is rotated rightwards by four partitions, i.e. 16 bits, by the rotate-shift as tabulated in Fig. 19. Then, in the STAGE I′ OUTPUT output selection control based on Fig. 20 takes place, and, as a result of this, data as shown in Fig. 22 is supplied to the select part output (STAGE I′ OUTPUT). In the stage II out-

put, data H to 7 in Fig. 22 of the select part output—STAGE I' OUTPUT—(in practice, the partitions H, 0 and 1 are 0) is shifted rightwards by one bit, and data 8 to G of the select part output—STAGE I' OUTPUT—is shifted leftwards by three bits.

By limiting the shift in the stage II shift part to rightward or leftward shift alone, as described above, the number of gates is much reduced as compared with the number required in a case in which both of rightward and leftward shift can be performed, so that the structure can be simplified.

In the explanatory diagrams of Fig. 16 and 19, if RIGHT and LEFT are exchanged and if the bit positions 32 and 63 indicated in Fig. 19 are changed to 31 and 0 respectively, it will be apparent that the operations of Figs. 16 and 19 are essentially identical with each other.

Accordingly, respective rotate parts can be constituted by using the same type of chip with symmetrical circuit arrangements. In a case in which the shift parts for the second stage of shifting, stage II, are constituted by two chips into which one chip is split at the centre thereof, it is a matter of course that the same chip can be used as is the case with the rotate parts used for the first stage of shifting, stage I.

As has been described in above, when forming a shift circuit from a plurality of LSI chips, input data is divided so respective shift circuits may be formed on respective chips, and shift rotation is mostly performed in terms of the divided data. Shift-rotated data is selectively taken out, so that the number of circuits required for chip-cross can be greatly reduced and, in addition, the problem of time lag resulting from chip-cross during data shift can be mitigated.

Moreover, since the direction of rotation in the shift part can be restricted to one direction, the number of gates can be sharply reduced as compared with that in the case where use must be made of a shift part capable of shifting in both directions; consequently, the structure of the shift part can also be simplified. Furthermore, since 1's complements can be used for controlling the amount of rotation, the control operation is easy.

Further, by dividing the shift part into parts shifting data in mutually opposite directions, the shift circuit can be formed using LSI chips of identical arrangements so that the manufacturing cost can also be reduced.

Thus, when forming divided shift means from a plurality of chips in order to reduce time lag at an interface and resulting from chip-cross, divided input data is input to a plurality of data rotate parts, and the input data is rotated by a multiple of $2^A$ in the data rotate parts, and outputs from the different data rotate parts are selectively output by an output select part, and then the selected outputs are shifted by 0 to $2^A$-1 bits in the shift part, thereby obtaining output data shifted by a predetermined number of bits.

## Claims

1. A shift circuit for shifting a multi-bit input data word (A to R), operable to rotate the bits of the input word and to select rotated bits for forming a shifted multi-bit output data word, characterised in that the shift circuit comprises a plurality of shift means (13-1, 12-1, 14-1, 15-1, 16-1, 17-1; 13-2, 12-2, 14-2, 15-2, 16-2, 17-2) arranged to receive respective segments (A to H; J to R) of the input word, each segment comprising a plurality of consecutive bits of the input word, each shift means having a rotate part (12-1; 12-2) operable to rotate the bits of the segment received by the shift means, to form a rotated segment (FGHABCDE; PQRJKLMN) and a select part (14-1; 14-2) which forms a shifted segment (OOUABCDE, FGHJKLMN) by selecting, for each bit of the shifted segment, the bit of the same order from the rotated segment provided by the rotate part in the shift means to which the select part belongs or the bit of the same order from another rotated segment or no bit, which shifted segment forms a segment of a shifted multi-bit data word occupying a position in that data word homologous with the position in the input data word of the segment (A to H; J to R) received by the shift means to which the select part belongs, said shifted multi-bit data word forming or being used to form said shifted multi-bit output data word.

2. A circuit as claimed in claim 1, wherein each rotate part (12-1; 12-2) rotates the bits of the segment received by the shift means to which the rotate part belongs by a selected multiple of $2^A$ bits, which selected multiple may be 0 or $2^A$ bits or a higher multple of $2^A$ bits, and wherein each of the plurality of shift means further comprises a shift part (16-1; 16-2) for shifting the shifted multi-bit data word provided by the select parts (14-1; 14-2) of said plurality of shift means by a selected number of bits from 0 to $2^A$-1, in dependence upon the overall shift required, to form said shifted multi-bit output data word.

3. A circuit as claimed in claim 2, wherein to achieve a shift of the input word by $n.2^A+Q$ bits ($0 \leqslant Q \leqslant 2^A$-1) each rotate part rotates the bits of the segment received by the shift means to which the rotate part belongs by $n.2^A$ bits and the shift parts shift the shifted segments data by Q bits.

4. A circuit as claimed in claim 2, wherein the direction of shift in the shift part of each shift means is restricted to rightward (or leftward) shift only, and wherein to achieve a shift of the input word by $n.2^A+Q$ bits ($0 \leqslant Q \leqslant 2^{A-1}$) leftward (or rightward), each rotate part rotates the bits of the segment received by the shift means to which the rotate part belongs leftward (or rightward) by $(n+1).2^A$ bits, and the shift parts shift the shifted segments rightward (or leftward) by $2^A$—Q bits.

5. A circuit as claimed in claim 2, wherein the input word is divided into segments corresponding to its higher-order half and its lower-order half, and wherein to achieve a shift S of $S=P\times 2^A+Q$ $(0\leqslant Q\leqslant 2^A-1)$ bits,

(1) in a case in which the shift S is rightwards, the higher-order half segment is rotated rightwards by $P=2^A$ bits in the rotate parts and the shifted segments are shifted rightward by Q bits in the shift parts, and

(2) in a case in which the shift S is leftward, the higher-order half segment is rotated leftward by $(P+1)\times 2^A$ bits in the rotate parts and the shifted segments are shifted rightward by Q bits in the shift parts, and

(1) in a case in which the shift S is rightward, the lower-order half segment is rotated rightward by $(P+1)\times 2^A$ bits in the rotate parts and the shifted segments are shifted leftward by $2^A-Q$ bits in the shift parts, and

(2) in a case in which the shift S is leftward, the lower-order half segment is rotated leftward by $P\times 2^A$ bits in the rotate parts and the shifted segments are shifted leftward by Q in the shift parts.

6. A circuit as claimed in any preceding claim, wherein each shift means (13-1, 12-1, 14-1, 15-1, 16-1, 17-1; 13-2, 12-2, 14-2, 15-2, 16-2, 17-2) is implemented on chips (CI, CII; CII, CIV) separate from those of the other shift means.

7. A circuit as claimed in claim 6, wherein each rotate part (12-1; 12-2) is implemented on a separate chip (CI; CII) and each select part (14-1; 14-2) is implemented on a separate chip (CIII; CIV).

8. A circuit as claimed in claim 7, wherein all rotate part chips (CI; CII) are of the same type, and all select part chips (CIII; CIV) are of the same type.

**Patentansprüche**

1. Schiebeschaltung zum Verschieben eines Multibit-Eingangswortes (A bis R), die die Bits eines Eingangswortes zyklisch vertauschen und die zyklisch vertauschten Bits auswählen kann, um ein verschobenes Multibit-Ausgangsdatenwort zu bilden, dadurch gekennzeichnet, daß die Schiebeschaltung eine Anzahl von Schiebeeinrichtungen (13-1, 12-1, 14-1, 15-1, 16-1, 17-1; 32-2, 12-2, 14-2, 15-2, 16-2, 17-2) umfaßt, die so angeordnet sind, daß sie entsprechende Segmente (A bis H; J bis R) des Eingangswortes empfangen, wobei jedes Segment eine Anzahl von aufeinander folgenden Bits des Eingangswortes umfaßt, jede Schiebeeinrichtung einen Vertauschungsteil (12-1; 12-2) umfaßt, der die Bits des von den Schiebeeinrichtungen empfangenen Segments zyklisch vertauschen kann, um ein zyklisch vertauschtes Segment (FGHABCDE; PQRJKLMN) zu bilden, und einen Auswahlteil (14-1; 14-2), der ein verschobenes Segment (OOOABCDE, FGHJKLMN) bildet, indem er, für jedes Bit des verschobenen Segments, das Bit derselben Ordnung des zyklisch vertauschten Segments auswählt, das von dem vertauschten Teil in der Schiebeeinrichtung geliefert wird, zu welcher der Auswahlteil gehört, oder das Bit derselben Ordnung von einem anderen zyklisch vertauschten Segment, oder kein Bit, wobei das verschobene Segment ein Segment eines verschobenen Multibit-Datenwortes bildet, das eine Position in dem Datenwort besetzt, die homolog ist mit der Position in dem Eingangsdatenwort des Segments (A bis H; J bis R), das von der Verschiebeeinrichtung, zu der der Auswahlteil gehört, empfangen wird, und das verschobene Multibit-Datenword das genannte verschobene Multibit-Ausgangsdatenwort bildet oder zu dessen Bildung verwendet wird.

2. Schaltung nach Anspruch 1, bei welcher jeder Vertauschungsteil (12-1; 12-2) die Bits des Segments, die von den Schiebeeinrichtungen empfangen werden, zu denen der vertauschungsteil gehört, um ein ausgewähltes Vielfaches von $2^A$ Bits vertauscht, wobei das augwählte Vielfache 0, $2^A$ Bits oder ein höheres Vielfaches von $2^A$ Bits sein kann, und bei welcher jede der Schiebeeinrichtungen ferner einen Schiebeteil (16-1; 16-2) zur Schiebung des verschobenen Multibit-Datenwortes, welches von den Auswahlteilen (14-1; 14-2) der genannten Anzahl von Schiebeeinrichtungen geliefert wird, um eine ausgewählte Zahl von Bits von 0 bis $2^A$ umfaßt, in Abhängigkeit von der eforderlichen gesamten Verschiebung, um das verschobene Multibit-Ausgangsdatenwort zu bilden.

3. Schaltung nach Anspruch 2, bei welcher zur Erreichung einer Verschiebung des Eingangswortes um $n.2^A+Q$ Bits $(0\leqslant Q\leqslant 2^A-1)$ jeder Vertauschungsteil die von dem Segment über die Schiebeeinrichtungen, zu denen der Vertauschungsteil gehört, empfangenen Bits um $n.2^A$ Bits verschiebt und die Schiebeteile die verschobenen Segmentdaten um Q Bits verschieben.

4. Schaltung nach Anspruch 2, in welcher die Schieberichtung in dem Schiebeteil jeder Schiebeeinrichtung auf die Verschiebung nach rechts (oder links) beschränkt ist, und bei welcher zur Erzielung einer Verschiebung des Eingangswortes um $n.2^A+Q$ Bits $(0\leqslant Q\leqslant 2^{A-1})$ nach links (oder rechts) jeder Vertauschungsteil, die Bits des Segments, die von der Schiebeeinrichtungen, zu denen der Vertauschungsteil gehört, um $(n+1).2^A$ Bits nach links (oder rechts) zyklisch vertauscht, und die Schiebeteile die verschobenen Segmente um $2^A-Q$ Bits nach rechts (oder links) verschieben.

5. Schaltung nach Anspruch 2, bei welcher das Eingangswort in Segmente unterteilt wird, die ihrer Hälfte höherer Ordnung und ihrer Hälfte niedrigerer Ordnung entsprechen, und bei welcher zur Erzielung einer Verschiebung S von $S=P\times 2^A+Q$ $(0\leqslant Q\leqslant 2^A-1)$ Bits

(1) falls die Verschiebung nach rechts erfolgt, die Segmente höherer Ordnung in den Vertauschungsteilen nach rechts um $P\times 2^A$ Bits

zyklisch vertauscht wird und die verschobenen Segmente in den Schiebeteilen nach rechts um Q Bits verschoben werden, und

(2) falls die Verschiebung nach links erfolgt, die Segmenthälfte höherer Ordnung nach links $(P+1)\times2^A$ Bits in den Vertauschchungsteilen zyklisch vertauscht wird und die verschobenen Segmente in den Schiebeteilen um Q Bits verschoben werden, und

(1) falls die Verschiebung S nach rechts erfolgt, die Segmentehälfte niedriger Ordnung in den Vertauschungsteilen um $(P+1)\times2^A$ Bits nach rechts zyklisch vertauscht wird und die verschobenen Segmente in den Schiebeteilen um $2^A-Q$ Bits nach links verschoben werden, und

(2) falls die Verschiebung S nach links erfolgt, die Segmentehälfte niedriger Ordnung in den Vertauschungsteilen um $P\times2^A$ Bits nach links zyklisch vertauscht wird und die verschobenen Segmente in den Schiebeteilen um Q Bits verschoben werden.

6. Schaltung nach einem der vorhergehenden Ansprüche, bei welcher jede Schiebeeinrichtung (13-1, 12-1, 14-1, 15-1, 16-1, 17-1; 13-2, 12-2, 14-2, 15-2, 16-2, 17-2) auf den Chips (CI, CII; CII, CIV) separat von denen für die anderen Schiebeeinrichtungen implementiert werden.

7. Schaltung nach Anspruch 6, bei welcher jeder Vertauschungsteil (12-1; 12-2) auf einem separaten Chip (CI; CII) implementiert ist und jeder Auswahlteil (14-1; 14-2) auf einem separaten Chip (CIII; CIV) implementiert ist.

8. Schaltung nach Anspruch 7, bei welcher alle Vertauschungteilchips (CI; CII) vom selben Typ sind und alle Auswahlteilchips (CIII; CIV) von dem selben Typ sind.

**Revendications**

1. Circuit à décalage destine à décaler un mot de données d'entrée à plusieurs bits (A à R) ayant pour fonction de faire circuler les bits du mot d'entrée et de sélectionner des bits ayant circuler pour former un mot de données de sortie à plusieurs bits décalé, caractérisé en ce que le circuit à décalage comporte plusieurs dispositifs de décalage (13-1, 12-1, 14-1, 15-1, 16-1, 17-1; 13-2, 12-2, 14-2, 16-2, 17-2) agencés pour recevoir des segments respectifs (A à H, J à R du mot d'entrée), le segment comprenant plusieurs bits consécutifs du mot d'entrée, chaque dispositif de décalage comprenant une partie de circulation (12-1; 12-2) ayant pour fonction de faire circuler les bits du segment reçu par le dispositif de décalage pour former un segment ayant circulé (FGHABCDE; PQRJKLMN) et une partie de sélection (14-1; 14-2) qui forme un segment décalé (OOOABCDE, FGHJKLMN) en sélectionnant, pour chaque bit du segment décalé, le bit du même ordre du segment ayant circulé produit par la partie de circulation dans le dispositif de décalage auquel appartient la partie de sélection ou le bit de même ordre d'un autre segment ayant circulé, ou aucun bit, le segment décalé formant un segment d'un mot de données décalé à plusieurs bits occupant une position dans ce mot de données homologue de la position dans le mot de données d'entrée du segment (A à H; J à R) reçu par le dispositif de décalage auquel appartient la partie de sélection, ledit mot de données décalé à plusieurs bits formant ou étant utilisé pour former ledit mot de données de sortie décalé à plusieurs bits.

2. Circuit selon la revendication 1, dans lequel chaque partie de circulation (12-1; 12-2) fait circuler les bits du segment reçu par le dispositif de décalage auquel appartient la partie de circulation, d'un multiple sélectionné de $2^A$ bits, avec le multiple sélectionné pouvant être 0 à $2^A$ bits ou un multiple supérieur de $2^A$ bits, et dans lequel chacun des plusieurs dispositifs de décalage comportent en outre une partie de décalage (16-1; 16-2) pour décaler le mot de données décalé à plusieurs bits produit par les parties de sélection (14-1; 14-2) desdits plusieurs dispositifs de décalage, d'un nombre sélectionné de bits de 0 à $2^A-1$, en fonction du décalage global requis, pour former ledit mot de données de sortie décalé à plusieurs bits.

3. Circuit selon la revendication 2, dans lequel, pour obtenir un décalage du mot d'entrée de $n.2^A+Q$ bits $(0\leq Q\leq2^A-1)$ chaque partie de circulation fait circuler les bits du segment reçu par le dispositif de décalage auquel appartient la partie de circulation de $n.2^A$ bits, et les parties de décalage décalent les données des segments décalés de Q bits.

4. Circuit selon la revendication 2, dans lequel le sens de décalage dans la partie de décalage de chaque dispositif de décalage est limité à seulement un décalage vers la droite ou vers la gauche, et dans lequel pour obtenir un décalage du mot d'entrée de $n.2^A+Q$ bits $(0\leq Q<2^{A-1})$ vers la gauche ou vers la droite, chaque partie de circulation fait circuler les bits du segment reçu par le dispositif de décalage auquel appartient la partie de circulation, vers la gauche ou vers la droite de $(n+1).2^A$ bits et les parties de décalage décalent les segments décalés vers la droite ou vers la gauche de $2^A-Q$ bits.

5. Circuit selon la revendication 2, dans lequel le mot d'entrée est divisé en segments correspondant à sa moitié d'ordre supérieur et sa moitié d'ordre inférieur et dans lequel pour obtenir un décalage S de $S=P\times2^A+Q$ $(0\leq Q\leq2^A-1)$ bits,

(1) dans le cas où le décalage S est vers la droite, le segment de moitié d'ordre supérieur est mis en circulation vers la droite de $P\times2^A$ bits dans les parties de circulation et les segments décalés sont décalés vers la droite de Q bits dans les parties de décalage, et

(2) dans un cas où le décalage S est vers la gauche, le segment de moitié d'ordre supérieur est mis en circulation vers la gauche de

$(P+1)\times2^A$ bits dans les parties de circulation et les segments décalés sont décalés vers la droite de Q bits dans les parties de décalage, et

(1) dans un cas où le décalage S est vers la droite, le segment de moitié d'ordre inférieur est mis en circulation vers la droite de $(P+1)\times2^A$ bits dans les parties de circulation et les segments décalés sont décalés vers la gauche de $2^A-Q$ bits dans les parties de décalage, et

(2) dans un cas où le décalage S est vers la gauche, le segment de moitié d'ordre inférieur est mis en circulation vers la gauche de $P\times2^A$ bits dans les parties de circulation et les segments décalés sont décalés vers la gauche de Q dans les parties de décalage.

6. Circuit selon l'une quelconque des revendications précédentes, dans lequel chaque dispositif de décalage (13-1, 12-1, 14-1, 15-1, 16-1, 17-1; 13-2, 12-2, 14-2, 15-2, 16-2, 17-2) est réalisé sur des pastilles (CI, CII; CII, CIV) séparées de celles des autres dispositifs de décalage.

7. Circuit selon la revendication 6, dans lequel chaque partie de circulation (12-1, 12-2) est réalisée sur une pastille séparée (CI, CII) et chaque partie de sélection (14-1; 14-2) est réalisée sur une pastille séparée (CIII, CIV).

8. Circuit selon la revendication 7, dans lequel toutes les pastilles des parties de circulation (CI, CII) sont du même type et toutes les pastilles des parties de sélection (CII, CIV) sont du même type.

# FIG. I

# FIG. 2

A

| A | B | C | D | E | F | G | H | J | K | L | M | N | P | Q | R | 7 |

| O | O | O | A | B | C | D | E | F | G | H | J | K | L | M | N | 8 |

B

I | II

7-1 | A | B | C | D | E | F | G | H | J | K | L | M | N | P | Q | R | 7-2

8-1 | O | O | O | A | B | C | D | E | F | G | H | J | K | L | M | N | 8-2

# FIG. 3

I   II

9-1 | A | B | C | D | E | F | G | H | | J | K | L | M | N | P | Q | R | 9-2

10-1 | F | G | H | A | B | C | D | E | | P | Q | R | J | K | L | M | N | 10-2

| | | | A | B | C | D | E | F | G | H | J | K | L | M | N | 11

# FIG. 4

10-1 | 0 | 1 | 2 | 3 | 4 | 5 | 6 | 7 | 8 | 9 | A | B | C | D | E | F | 10-2

11 | 0' | 1' | 2' | 3' | 4' | 5' | 6' | 7' | 8' | 9' | A' | B' | C' | D' | E' | F' |

0 0 2 5 3 2 3

# FIG. 5

| AMOUNT OF SHIFT | | | | DIRECTION OF SHIFT | 0 | 1 | 2 | 3 | 4 | 5 | 6 | 7 |
|---|---|---|---|---|---|---|---|---|---|---|---|---|
| 32 | 16 | 8 | 4 | | | | | | | | | |
| 0/1 | 0/0 | 0/0 | 0/0 | RIGHT | 0 | 1 | 2 | 3 | 4 | 5 | 6 | 7 |
| 0/1 | 0/0 | 0/0 | 1 | RIGHT | 7 | 0 | 1 | 2 | 3 | 4 | 5 | 6 |
| 0/1 | 0/0 | 1 | 0/0 | RIGHT | 6 | 7 | 0 | 1 | 2 | 3 | 4 | 5 |
| 0/1 | 0/0 | 1 | 1 | RIGHT | 5 | 6 | 7 | 0 | 1 | 2 | 3 | 4 |
| 0/1 | 1 | 0/0 | 0/0 | RIGHT | 4 | 5 | 6 | 7 | 0 | 1 | 2 | 3 |
| 0/1 | 1 | 0/0 | 1 | RIGHT | 3 | 4 | 5 | 6 | 7 | 0 | 1 | 2 |
| 0/1 | 1 | 1 | 0/0 | RIGHT | 2 | 3 | 4 | 5 | 6 | 7 | 0 | 1 |
| 0/1 | 1 | 1 | 1 | RIGHT | 1 | 2 | 3 | 4 | 5 | 6 | 7 | 0 |
| 0/1 | 0/0 | 0/0 | 0/0 | LEFT | 0 | 1 | 2 | 3 | 4 | 5 | 6 | 7 |
| 0/1 | 0/0 | 0/0 | 1 | LEFT | 1 | 2 | 3 | 4 | 5 | 6 | 7 | 0 |
| 0/1 | 0/0 | 1 | 0/0 | LEFT | 2 | 3 | 4 | 5 | 6 | 7 | 0 | 1 |
| 0/1 | 0/0 | 1 | 1 | LEFT | 3 | 4 | 5 | 6 | 7 | 0 | 1 | 2 |
| 0/1 | 1 | 0/0 | 0/0 | LEFT | 4 | 5 | 6 | 7 | 0 | 1 | 2 | 3 |
| 0/1 | 1 | 0/0 | 1 | LEFT | 5 | 6 | 7 | 0 | 1 | 2 | 3 | 4 |
| 0/1 | 1 | 1 | 0/0 | LEFT | 6 | 7 | 0 | 1 | 2 | 3 | 4 | 5 |
| 0/1 | 1 | 1 | 1 | LEFT | 7 | 0 | 1 | 2 | 3 | 4 | 5 | 6 |

# FIG. 6

| STAGE I' 4BIT GROUP NO | 0 1 2 3 4 5 6 7 | 8 9 A B C D E F |
|---|---|---|
| RIGHT SHIFT 0 ~ 3 | 0 1 2 3 4 5 6 7 | 8 9 A B C D E F |
| 4 ~ 7 | 1 2 3 4 5 6 7 | 0 9 A B C D E F |
| 8 ~ 11 | 2 3 4 5 6 7 | 0 1 A B C D E F |
| 12 ~ 15 | 3 4 5 6 7 | 0 1 2 B C D E F |
| 16 ~ 19 | 4 5 6 7 | 0 1 2 3 C D E F |
| 20 ~ 23 | 5 6 7 | 0 1 2 3 4 D E F |
| 24 ~ 27 | 6 7 | 0 1 2 3 4 5 E F |
| 28 ~ 31 | 7 | 0 1 2 3 4 5 6 F |
| 32 ~ 35 | | 0 1 2 3 4 5 6 7 |
| 36 ~ 39 | | 1 2 3 4 5 6 7 |
| 40 ~ 43 | | 2 3 4 5 6 7 |
| 44 ~ 47 | | 3 4 5 6 7 |
| 48 ~ 51 | | 4 5 6 7 |
| 52 ~ 55 | | 5 6 7 |
| 56 ~ 59 | | 6 7 |
| 60 ~ 63 | | 7 |
| LEFT SHIFT 0 ~ 3 | 0 1 2 3 4 5 6 7 | 8 9 A B C D E F |
| 4 ~ 7 | 0 1 2 3 4 5 6 F | 8 9 A B C D E |
| 8 ~ 11 | 0 1 2 3 4 5 E F | 8 9 A B C D |
| 12 ~ 15 | 0 1 2 3 4 D E F | 8 9 A B C |
| 16 ~ 19 | 0 1 2 3 C D E F | 8 9 A B |
| 20 ~ 23 | 0 1 2 B C D E F | 8 9 A |
| 24 ~ 27 | 0 1 A B C D E F | 8 9 |
| 28 ~ 31 | 0 9 A B C D E F | 8 |
| 32 ~ 35 | 8 9 A B C D E F | |
| 36 ~ 39 | 8 9 A B C D E | |
| 40 ~ 43 | 8 9 A B C D | |
| 44 ~ 47 | 8 9 A B C | |
| 48 ~ 51 | 8 9 A B | |
| 52 ~ 55 | 8 9 A | |
| 56 ~ 59 | 8 9 | |
| 60 ~ 63 | 8 | |

FIG. 7

INPUT DATA

OUTPUT DATA

0 025 323

# FIG. 8

**STAGE I INPUT**  9-1  9-2

| ⓪ 1 2 3 | 4 5 6 7 | 8 9 10 11 | 12 13 14 15 | 16 17 18 19 | 20 21 22 23 | 24 25 ㉖ 27 | 28 29 30 31 | 32 33 34 35 | 36 37 38 39 | 40 41 42 43 | 44 45 46 47 | 48 49 50 51 | 52 53 54 55 | 56 57 58 59 | 60 61 62 63 |

**STAGE I OUTPUT**  10-1  10-2

| 12 13 14 15 | 16 17 18 19 | 20 21 22 23 | 24 25 ㉖ 27 | 28 29 30 31 | ⓪ 1 2 3 | 4 5 6 7 | 8 9 10 11 | 44 45 46 47 | 48 49 50 51 | 52 53 54 55 | 56 57 58 59 | 60 61 62 63 | 32 33 34 35 | 36 37 38 39 | 40 41 42 43 |

11

**STAGE I' OUTPUT**

| 'o' | 'o' | 'o' | 'o' | 'o' | ⓪ 1 2 3 | 4 5 6 7 | 8 9 10 11 | 12 13 14 15 | 16 17 18 19 | 20 21 22 23 | 24 25 ㉖ 27 | 28 29 30 31 | 32 33 34 35 | 36 37 38 39 | 40 41 42 43 |

**STAGE II OUTPUT**

| 'o' | 'o' | 'o' | 'o' | 'o' | 'o' ⓪ 1 2 | 3 4 5 6 | 7 8 9 10 | 11 12 13 14 | 15 16 17 18 | 19 20 21 22 | 23 24 25 26 | 27 28 29 30 | 31 32 33 34 | 35 36 37 38 | 39 40 41 42 |

# FIG. 9

**STAGE I INPUT**  9-1  9-2

| 0 1 2 3 | 4 5 6 7 | 8 9 10 11 | 12 13 14 15 | 16 17 18 19 | 20 21 22 23 | 24 25 26 27 | 28 ㉙ 30 31 | 32 33 34 35 | 36 37 38 39 | ㊵ 41 42 43 | 44 45 46 47 | 48 49 50 51 | 52 53 54 55 | 56 57 58 59 | 60 61 62 63 |

**STAGE I OUTPUT**  10-1  10-2

| 20 21 22 23 | 24 25 26 27 | 28 ㉙ 30 31 | 0 1 2 3 | 4 5 6 7 | 8 9 10 11 | 12 13 14 15 | 16 17 18 19 | 52 53 54 55 | 56 57 58 59 | 60 61 62 63 | 32 33 34 35 | 36 37 38 39 | ㊵ 41 42 43 | 44 45 46 47 | 48 49 50 51 |

**STAGE I' OUTPUT**  11

| 20 21 22 23 | 24 25 26 27 | 28 ㉙ 30 31 | 32 33 34 35 | 36 37 38 39 | ㊵ 41 42 43 | 44 45 46 47 | 48 49 50 51 | 52 53 54 55 | 56 57 58 59 | 60 61 62 63 | 'o' | 'o' | 'o' | 'o' | 'o' |

**STAGE II OUTPUT**

| 22 23 24 25 | 26 27 28 ㉙ | 30 31 32 33 | 34 35 36 37 | 38 39 ㊵ 41 | 42 43 44 45 | 46 47 48 49 | 50 51 52 53 | 54 55 56 57 | 58 59 60 61 | 62 63 'o' 'o' | 'o' | 'o' | 'o' | 'o' | 'o' |

+ RIGHT SHIFT
+ SHIFT 16
+ SHIFT 08

+ RIGHT SHIFT
+ SHIFT 04

13-1. SHIFT CONTROL
FIG. 10
12-1 ROTATE PART

+ INPUT BIT 00
24
16
08

— LEVEL 1 BIT 00H
— LEVEL 1 BIT 00L
— LEVEL 1 BIT 28H
28L

— LEVEL 2 BIT 00

01
25
17
09

— LEVEL 1 BIT 01H
— LEVEL 1 BIT 01L
29H
29L

— LEVEL 2 BIT 01

02
26
18
10

— LEVEL 1 BIT 02H
— LEVEL 1 BIT 02L
30H
30L

— LEVEL 2 BIT 02

03
27
19
11

— LEVEL 1 BIT 03H
— LEVEL 1 BIT 03L
31H
31L

— LEVEL 2 BIT 03

31
23
15
07

— LEVEL 1 BIT 31H
— LEVEL 1 BIT 31L
27H
27L

— LEVEL 2 BIT 31

0025323

RIGHT SHIFT
+ SHIFT 16
+ SHIFT 08

− RIGHT SHIFT
+ SHIFT 04

I3-2 SHIFT CONT PART
FIG. 11
I2-2 ROTATE PART

INPUT BIT 63
39
47
55

62
38
46
54

61
37
45
53

60
36
44
52

32
40
48
56

− LEVEL I BIT 63H
− LEVEL I BIT 63L
− LEVEL I BIT 35H
35L

− LEVEL I BIT 62H
− LEVEL I BIT 62L
34H
34L

− LEVEL I BIT 61H
− LEVEL I BIT 61L
33H
33L

− LEVEL I BIT 60H
− LEVEL I BIT 60L
32H
32L

− LEVEL I BIT 32H
− LEVEL I BIT 32L
36H
36L

−LEVEL 2 BIT 63

−LEVEL 2 BIT 62

−LEVEL 2 BIT 61

−LEVEL 2 BIT 60

−LEVEL 2 BIT 32

0025 323

FIG 12

-15-2 ONE PARTITION OF SELECT PART OUTPUT II  -16-2 SHIFT PART

FIG. 13

-14-2 SELECT PART

0025 323

FIG. 14

17-1 SHIFT CONTROL PART

0025323

17-2 SHIFT CONTROL PART

FIG. 15

0025 323

# FIG. 16

| AMOUNT OF SHIFT | | | | DIRECTION OF SHIFT | 0 | 1 | 2 | 3 | 4 | 5 | 6 | 7 |
|---|---|---|---|---|---|---|---|---|---|---|---|---|
| 32 | 16 | 8 | 4 | | | | | | | | | |
| 0 | 0 | 0 | 0 | RIGHT | 0 | 1 | 2 | 3 | 4 | 5 | 6 | 7 |
| 0 | 0 | 0 | 1 | RIGHT | 7 | 0 | 1 | 2 | 3 | 4 | 5 | 6 |
| 0 | 0 | 1 | 0 | RIGHT | 6 | 7 | 0 | 1 | 2 | 3 | 4 | 5 |
| 0 | 0 | 1 | 1 | RIGHT | 5 | 6 | 7 | 0 | 1 | 2 | 3 | 4 |
| 0 | 1 | 0 | 0 | RIGHT | 4 | 5 | 6 | 7 | 0 | 1 | 2 | 3 |
| 0 | 1 | 0 | 1 | RIGHT | 3 | 4 | 5 | 6 | 7 | 0 | 1 | 2 |
| 0 | 1 | 1 | 0 | RIGHT | 2 | 3 | 4 | 5 | 6 | 7 | 0 | 1 |
| 0 | 1 | 1 | 1 | RIGHT | 1 | 2 | 3 | 4 | 5 | 6 | 7 | 0 |
| 0 | 0 | 0 | 0 | LEFT | 1 | 2 | 3 | 4 | 5 | 6 | 7 | 0 |
| 0 | 0 | 0 | 1 | LEFT | 2 | 3 | 4 | 5 | 6 | 7 | 0 | 1 |
| 0 | 0 | 1 | 0 | LEFT | 3 | 4 | 5 | 6 | 7 | 0 | 1 | 2 |
| 0 | 0 | 1 | 1 | LEFT | 4 | 5 | 6 | 7 | 0 | 1 | 2 | 3 |
| 0 | 1 | 0 | 0 | LEFT | 5 | 6 | 7 | 0 | 1 | 2 | 3 | 4 |
| 0 | 1 | 0 | 1 | LEFT | 6 | 7 | 0 | 1 | 2 | 3 | 4 | 5 |
| 0 | 1 | 1 | 0 | LEFT | 7 | 0 | 1 | 2 | 3 | 4 | 5 | 6 |
| 0 | 1 | 1 | 1 | LEFT | 0 | 1 | 2 | 3 | 4 | 5 | 6 | 7 |

# FIG. 17

# FIG. 21

STAGE I OUTPUT
(4BIT GROUP NO.)

STAGE I'
4BIT GROUP NO.

# F I G. 18

| STAGEI' 4BIT GROUP NO | | H | 0 | 1 | 2 | 3 | 4 | 5 | 6 | 7 | 8 | 9 | A | B | C | D | E | F |
|---|---|---|---|---|---|---|---|---|---|---|---|---|---|---|---|---|---|---|
| RIGHT SHIFT | 0 ~ 3 | 0 | 1 | 2 | 3 | 4 | 5 | 6 | 7 | 8 | 9 | A | B | C | D | E | F | |
| | 4 ~ 7 | | 1 | 2 | 3 | 4 | 5 | 6 | 7 | 0 | 9 | A | B | C | D | E | F | |
| | 8 ~ 11 | | | 2 | 3 | 4 | 5 | 6 | 7 | 0 | 1 | A | B | C | D | E | F | |
| | 12 ~ 15 | | | | 3 | 4 | 5 | 6 | 7 | 0 | 1 | 2 | B | C | D | E | F | |
| | 16 ~ 19 | | | | | 4 | 5 | 6 | 7 | 0 | 1 | 2 | 3 | C | D | E | F | |
| | 20 ~ 23 | | | | | | 5 | 6 | 7 | 0 | 1 | 2 | 3 | 4 | D | E | F | |
| | 24 ~ 27 | | | | | | | 6 | 7 | 0 | 1 | 2 | 3 | 4 | 5 | E | F | |
| | 28 ~ 31 | | | | | | | | 7 | 0 | 1 | 2 | 3 | 4 | 5 | 6 | F | |
| | 32 ~ 35 | | | | | | | | | 0 | 1 | 2 | 3 | 4 | 5 | 6 | 7 | |
| | 36 ~ 39 | | | | | | | | | | 1 | 2 | 3 | 4 | 5 | 6 | 7 | |
| | 40 ~ 43 | | | | | | | | | | | 2 | 3 | 4 | 5 | 6 | 7 | |
| | 44 ~ 47 | | | | | | | | | | | | 3 | 4 | 5 | 6 | 7 | |
| | 48 ~ 51 | | | | | | | | | | | | | 4 | 5 | 6 | 7 | |
| | 52 ~ 55 | | | | | | | | | | | | | | 5 | 6 | 7 | |
| | 56 ~ 59 | | | | | | | | | | | | | | | 6 | 7 | |
| | 60 ~ 63 | | | | | | | | | | | | | | | | 7 | |
| LEFT SHIFT | 0 ~ 3 | 7 | 0 | 1 | 2 | 3 | 4 | 5 | 6 | F | 8 | 9 | A | B | C | D | E | |
| | 4 ~ 7 | 7 | 0 | 1 | 2 | 3 | 4 | 5 | E | F | 8 | 9 | A | B | C | D | | |
| | 8 ~ 11 | 7 | 0 | 1 | 2 | 3 | 4 | D | E | F | 8 | 9 | A | B | C | | | |
| | 12 ~ 15 | 7 | 0 | 1 | 2 | 3 | C | D | E | F | 8 | 9 | A | B | | | | |
| | 16 ~ 19 | 7 | 0 | 1 | 2 | B | C | D | E | F | 8 | 9 | A | | | | | |
| | 20 ~ 23 | 7 | 0 | 1 | A | B | C | D | E | F | 8 | 9 | | | | | | |
| | 24 ~ 27 | 7 | 0 | 9 | A | B | C | D | E | F | 8 | | | | | | | |
| | 28 ~ 31 | 7 | 8 | 9 | A | B | C | D | E | F | | | | | | | | |
| | 32 ~ 35 | F | 8 | 9 | A | B | C | D | E | | | | | | | | | |
| | 36 ~ 39 | F | 8 | 9 | A | B | C | D | | | | | | | | | | |
| | 40 ~ 43 | F | 8 | 9 | A | B | C | | | | | | | | | | | |
| | 44 ~ 47 | F | 8 | 9 | A | B | | | | | | | | | | | | |
| | 48 ~ 51 | F | 8 | 9 | A | | | | | | | | | | | | | |
| | 52 ~ 55 | F | 8 | 9 | | | | | | | | | | | | | | |
| | 56 ~ 59 | F | 8 | | | | | | | | | | | | | | | |
| | 60 ~ 63 | F | | | | | | | | | | | | | | | | |

# FIG. 19

| AMOUNT OF SHIFT | | | | DIRECTION OF SHIFT | 32 | 35 36 | 39 40 | 43 44 | 47 48 | 51 52 | 55 56 | 59 60 | 63 |
|---|---|---|---|---|---|---|---|---|---|---|---|---|---|
| 32 | 16 | 8 | 4 | | 8 | 9 | A | B | C | D | E | F |
| 0 | 0 | 0 | 0 | RIGHT | F | 8 | 9 | A | B | C | D | E |
| 0 | 0 | 0 | 1 | RIGHT | E | F | 8 | 9 | A | B | C | D |
| 0 | 0 | 1 | 0 | RIGHT | D | E | F | 8 | 9 | A | B | C |
| 0 | 0 | 1 | 1 | RIGHT | C | D | E | F | 8 | 9 | A | B |
| 0 | 1 | 0 | 0 | RIGHT | B | C | D | E | F | 8 | 9 | A |
| 0 | 1 | 0 | 1 | RIGHT | A | B | C | D | E | F | 8 | 9 |
| 0 | 1 | 1 | 0 | RIGHT | 9 | A | B | C | D | E | F | 8 |
| 0 | 1 | 1 | 1 | RIGHT | 8 | 9 | A | B | C | D | E | F |
| 0 | 0 | 0 | 0 | LEFT | 8 | 9 | A | B | C | D | E | F |
| 0 | 0 | 0 | 1 | LEFT | 9 | A | B | C | D | E | F | 8 |
| 0 | 0 | 1 | 0 | LEFT | A | B | C | D | E | F | 8 | 9 |
| 0 | 0 | 1 | 1 | LEFT | B | C | D | E | F | 8 | 9 | A |
| 0 | 1 | 0 | 0 | LEFT | C | D | E | F | 8 | 9 | A | B |
| 0 | 1 | 0 | 1 | LEFT | D | E | F | 8 | 9 | A | B | C |
| 0 | 1 | 1 | 0 | LEFT | E | F | 8 | 9 | A | B | C | D |
| 0 | 1 | 1 | 1 | LEFT | F | 8 | 9 | A | B | C | D | E |

# FIG. 20

| STAGE | 4BIT GROUP NO | H | 0 | 1 | 2 | 3 | 4 | 5 | 6 | 7 | 8 | 9 | A | B | C | D | E | F | G |
|---|---|---|---|---|---|---|---|---|---|---|---|---|---|---|---|---|---|---|---|
| RIGHT SHIFT | 0 – 3 | | 0 | 1 | 2 | 3 | 4 | 5 | 6 | 7 | 7 | 9 | A | B | C | D | E | F | 8 |
| | 4 – 7 | | | 1 | 2 | 3 | 4 | 5 | 6 | 7 | 7 | 0 | A | B | C | D | E | F | 8 |
| | 8 – 11 | | | | 2 | 3 | 4 | 5 | 6 | 7 | 7 | 0 | 1 | B | C | D | E | F | 8 |
| | 12 – 15 | | | | | 3 | 4 | 5 | 6 | 7 | 7 | 0 | 1 | 2 | C | D | E | F | 8 |
| | 16 – 19 | | | | | | 4 | 5 | 6 | 7 | 7 | 0 | 1 | 2 | 3 | D | E | F | 8 |
| | 20 – 23 | | | | | | | 5 | 6 | 7 | 7 | 0 | 1 | 2 | 3 | 4 | E | F | 8 |
| | 24 – 27 | | | | | | | | 6 | 7 | 7 | 0 | 1 | 2 | 3 | 4 | 5 | F | 8 |
| | 28 – 31 | | | | | | | | | 7 | 7 | 0 | 1 | 2 | 3 | 4 | 5 | 6 | 8 |
| | 32 – 35 | | | | | | | | | | 0 | 1 | 2 | 3 | 4 | 5 | 6 | 7 | |
| | 36 – 39 | | | | | | | | | | | 1 | 2 | 3 | 4 | 5 | 6 | 7 | |
| | 40 – 43 | | | | | | | | | | | | 2 | 3 | 4 | 5 | 6 | 7 | |
| | 44 – 47 | | | | | | | | | | | | | 3 | 4 | 5 | 6 | 7 | |
| | 48 – 51 | | | | | | | | | | | | | | 4 | 5 | 6 | 7 | |
| | 52 – 55 | | | | | | | | | | | | | | | 5 | 6 | 7 | |
| | 56 – 59 | | | | | | | | | | | | | | | | 6 | 7 | |
| | 60 – 63 | | | | | | | | | | | | | | | | | 7 | |
| LEFT SHIFT | 0 – 3 | 7 | 0 | 1 | 2 | 3 | 4 | 5 | 6 | 8 | 8 | 9 | A | B | C | D | E | F | |
| | 4 – 7 | 7 | 0 | 1 | 2 | 3 | 4 | 5 | F | 8 | 8 | 9 | A | B | C | D | E | | |
| | 8 – 11 | 7 | 0 | 1 | 2 | 3 | 4 | E | F | 8 | 8 | 9 | A | B | C | D | | | |
| | 12 – 15 | 7 | 0 | 1 | 2 | 3 | D | E | F | 8 | 8 | 9 | A | B | C | | | | |
| | 16 – 19 | 7 | 0 | 1 | 2 | C | D | E | F | 8 | 8 | 9 | A | B | | | | | |
| | 20 – 23 | 7 | 0 | 1 | B | C | D | E | F | 8 | 8 | 9 | A | | | | | | |
| | 24 – 27 | 7 | 0 | A | B | C | D | E | F | 8 | 8 | 9 | | | | | | | |
| | 28 – 31 | 7 | 9 | A | B | C | D | E | F | 8 | 8 | | | | | | | | |
| | 32 – 35 | 8 | 9 | A | B | C | D | E | F | | | | | | | | | | |
| | 36 – 39 | 8 | 9 | A | B | C | D | E | | | | | | | | | | | |
| | 40 – 43 | 8 | 9 | A | B | C | D | | | | | | | | | | | | |
| | 44 – 47 | 8 | 9 | A | B | C | | | | | | | | | | | | | |
| | 48 – 51 | 8 | 9 | A | B | | | | | | | | | | | | | | |
| | 52 – 55 | 8 | 9 | A | | | | | | | | | | | | | | | |
| | 56 – 59 | 8 | 9 | | | | | | | | | | | | | | | | |
| | 60 – 63 | 8 | | | | | | | | | | | | | | | | | |

# FIG. 22

STAGE I INPUT  9-1  9-2

| 0 | 1 | 2 | 3 | 4 | 5 | ⑥ | 7 | 8 | 9 | 10 | 11 | 12 | 13 | 14 | 15 | 16 | 17 | 18 | ⑲ | 20 | 21 | 22 | 23 | 24 | 25 | 26 | 27 | 28 | 29 | 30 | 31 | 32 | ㉝ | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 |

STAGE I OUTPUT

| 20 | 21 | 22 | 23 | 24 | 25 | 26 | 27 | 28 | 29 | 30 | 31 | 0 | 1 | 2 | 3 | 4 | 5 | ⑥ | 7 | 8 | 9 | 10 | 11 | 12 | 13 | 14 | 15 | 16 | 17 | 18 | ⑲ | 48 | 49 | 50 | 51 | 52 | 53 | 54 | 55 | 56 | 57 | 58 | 59 | 60 | 61 | 62 | 63 | 32 | ㉝ | 34 | 35 | 36 | 37 | 38 | 39 | 40 | 41 | 42 | 43 | 44 | 45 | 46 | 47 |

STAGE I' OUTPUT

| 'o' | 'o' | 'o' | 'o' | 0 | 1 | 2 | 3 | 4 | 5 | ⑥ | 7 | 8 | 9 | 10 | 11 | 12 | 13 | 14 | 15 | 16 | 17 | 18 | ⑲ | 16 | 17 | 18 | ⑲ | 20 | 21 | 22 | 23 | 24 | 25 | 26 | 27 | 28 | 29 | 30 | 31 | 32 | ㉝ | 34 | 35 | 36 | 37 | 38 | 39 | 40 | 41 | 42 | 43 | 44 | 45 | 46 | 47 | 48 | 49 | 50 | 51 |

H  O  I  2  3  4  5  6  7  8  9  A  B  C  D  E  F  G

STAGE II OUTPUT

| 'o' | 'o' | 'o' | 'o' | 0 | 1 | 2 | 3 | 4 | 5 | ⑥ | 7 | 8 | 9 | 10 | 11 | 12 | 13 | 14 | 15 | 16 | 17 | 18 | ⑲ | 20 | 21 | 22 | 23 | 24 | 25 | 26 | 27 | 28 | 29 | 30 | 31 | 32 | ㉝ | 34 | 35 | 36 | 37 | 38 | 39 | 40 | 41 | 42 | 43 | 44 | 45 | 46 | 47 | 48 | 49 | 50 |